(19) Europäisches Patentamt / European Patent Office / Office européen des brevets

(11) **EP 2 160 655 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(51) Int Cl.:
***G03H 1/08*** *(2006.01)*

(21) Anmeldenummer: **08759668.0**

(86) Internationale Anmeldenummer:
**PCT/EP2008/056022**

(22) Anmeldetag: **16.05.2008**

(87) Internationale Veröffentlichungsnummer:
**WO 2008/138979 (20.11.2008 Gazette 2008/47)**

(54) **VERFAHREN ZUM GENERIEREN VON VIDEOHOLOGRAMMEN IN ECHTZEIT ZUR ERWEITERUNG EINER 3D-RENDERING-GRAPHIKPIPELINE**

METHOD FOR GENERATING VIDEO HOLOGRAMS IN REAL-TIME FOR ENHANCING A 3D-RENDERING GRAPHIC PIPELINE

PROCÉDÉ POUR PRODUIRE DES HOLOGRAMMES VIDÉO EN TEMPS RÉEL ET PERMETTANT D'AMÉLIORER UN PIPELINE GRAPHIQUE À RENDU EN 3D

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007 DE 102007023737**

(43) Veröffentlichungstag der Anmeldung:
**10.03.2010 Patentblatt 2010/10**

(73) Patentinhaber: **SeeReal Technologies S.A.**
**5365 Munsbach (LU)**

(72) Erfinder: **SCHWERDTNER, Alexander**
**01307 Dresden (DE)**

(74) Vertreter: **Bradl, Joachim**
**SeeReal Technologies GmbH**
**Blasewitzer Straße 43**
**01307 Dresden (DE)**

(56) Entgegenhaltungen:
**EP-A- 0 862 096          WO-A-02/39194**
**WO-A-2008/025839**

- **TAKAHASHI HIDEYA ET AL: "Direct volume access by an improved electro-holography image generator" PROCEEDINGS OF THE SPIE, SPIE, BELLINGHAM, VA, Bd. 2406, 1. Januar 1995 (1995-01-01), Seiten 220-225, XP007903699 ISSN: 0277-786X**
- **SHIMOBABA T ET AL: "Electroholographic display unit for three-dimensional display by use of special-purpose computational chip for holography and reflective LCD panel" OPTICS EXPRESS, OPTICAL SOCIETY OF AMERICA, WASHINGTON, DC, US, Bd. 13, Nr. 11, 30. Mai 2005 (2005-05-30), Seiten 4196-4201, XP002402619 ISSN: 1094-4087**

**Beschreibung**

Die Erfindung betrifft ein Verfahren zum Generieren von Videohologrammen aus dreidimensionalen Bilddaten mit Tiefeninformation in Echtzeit zur Erweiterung einer 3D-Rendering-Graphikpipeline.

Im Bereich des Renderns betrifft die Erfindung die so genannte 3D-Rendering-Pipeline oder Grafikpipeline, welche die Algorithmen von der vektoriellen, mathematischen Beschreibung einer Szene zum gerasterten Bild auf dem Monitor umfasst. Die dreidimensionalen Bilddaten beinhalten Tiefeninformation sowie in der Regel zusätzliche Beschreibungen zu Material- und Oberflächeneigenschaften. In der 3D-Rendering-Graphikpipeline erfolgt beispielsweise die Umrechnung von Bildschirmkoordinaten in Gerätekoordinaten, Texturierung, Clipping sowie das Antialiasing. Das gerasterte Bild, eine 2D-Projektion der 3D-Szene, das im Framebuffer eines Grafikadapters gespeichert wird, enthält nunmehr die Daten der Pixelwerte für die steuerbaren Pixel eines Monitors, beispielsweise eines LCD-Displays.

Im Bereich der Generierung holographischer Daten betrifft die Erfindung Verfahren und Einrichtungen zur Generierung von Hologrammwerten zur Darstellung der dreidimensionalen, durch Objektpunkte strukturierten Szene auf Lichtmodulatormitteln einer holographischen Wiedergabeeinrichtung.

Im Bereich Videohologramme betrifft die Erfindung ebenso eine so genannte holographische Pipeline. In dieser Pipeline erfolgt die Generierung komplexer Hologrammwerte als Pixelwerte für einen Lichtmodulator einer holographischen Anzeigevorrichtung.

Einer derartigen holographischen Wiedergabeeinrichtung liegt im Wesentlichen das Prinzip zugrunde, dass mit mindestens einem Lichtmodulatormittel, in welches eine in Objektpunkte zerlegte Szene als Gesamthologramm kodiert wird und als Rekonstruktion von einem Sichtbarkeitsbereich aus zu sehen ist, der innerhalb eines Periodizitätsintervalls der Rekonstruierten des Videohologramms liegt, zusammen mit jedem zu rekonstruierenden Objektpunkt der Szene ein Subhologramm definiert und das Gesamthologramm aus einer Überlagerung von Subhologrammen gebildet wird. Dabei wird im Wesentlichen das Prinzip verfolgt, vorrangig jene Wellenfront, die ein Objekt aussenden würde, in ein oder mehrere Sichtbarkeitsregionen zu rekonstruieren.

Im Detail liegt einer derartigen Einrichtung das Prinzip zugrunde, dass die Rekonstruktion eines einzelnen Objektpunkts jeweils nur ein Subhologramm als Teilmenge des am Lichtmodulatormittel kodierten Gesamthologramms erfordert. Die holographische Wiedergabeeinrichtung enthält wenigstens ein Bildschirmmittel. Dabei wird als Bildschirmmittel entweder der Lichtmodulator selbst bezeichnet, in dem das Hologramm einer Szene kodiert ist, oder ein optisches Element (z.B. Linse, Spiegel), auf das ein im Lichtmodulator kodiertes Hologramm oder eine im Lichtmodulator kodierte Wellenfront einer Szene abgebildet wird.

Die Festlegung des Bildschirmmittels und die zugehörigen Prinzipien zur Rekonstruktion der Szene in den Sichtbarkeitsbereich sind durch Dokumente des Anmelders beschrieben. In den Dokumenten WO 2004/044659 sowie WO 2006/027228 ist das Bildschirmmittel der Lichtmodulator selbst. Im Dokument WO 2006119760, Projektionsvorrichtung und Verfahren zur holographischen Rekonstruktion von Szenen, ist das Bildschirmmittel ein optisches Element, auf das ein im Lichtmodulator kodiertes Hologramm abgebildet wird.

In DE 10 2006 004 300.6, Projektionsvorrichtung zur holographischen Rekonstruktion von Szenen, ist das Bildschirmmittel ein optisches Element, auf das eine im Lichtmodulator kodierte Wellenfront der Szene abgebildet wird.

WO 2006/066919 des Anmelders beschreibt ein Verfahren zum Berechnen von Videohologrammen.

Ein "Sichtbarkeitsbereich" ist ein begrenzter Bereich, durch welchen der Betrachter die gesamte rekonstruierte Szene mit ausreichend großer Sichtbarkeit ansehen kann. Innerhalb des Sichtbarkeitsbereichs überlagern sich die Wellenfelder so, dass die rekonstruierte Szene für den Betrachter sichtbar wird. Der Sichtbarkeitsbereich befindet sich auf den oder nahe der Augen des Betrachters. Der Sichtbarkeitsbereich kann in die Richtungen X, Y und Z bewegt werden und wird mit bekannten Positionserkennungs- beziehungsweise Nachführeinrichtungen der aktuellen Betrachterposition nachgeführt. Es ist möglich, zwei Sichtbarkeitsbereiche zu verwenden, nämlich einen für jedes Auge. Aufwändigere Anordnungen von Sichtbarkeitsbereichen sind ebenfalls möglich. Es ist ferner möglich, Videohologramme so zu kodieren, dass für den Betrachter einzelne Objekte oder die ganze Szene scheinbar hinter dem Lichtmodulator liegen.

In diesem Dokument wird als Lichtmodulatormittel beziehungsweise SLM eine Einrichtung zum Steuern der Intensität, Farbe und/oder Phase durch Schalten, Austasten oder Modulieren von Lichtstrahlen einer oder mehrerer unabhängiger Lichtquellen bezeichnet. Eine holographische Wiedergabeeinrichtung beinhaltet in der Regel eine Matrix steuerbarer Pixel, wobei die Pixel die Amplitude und/oder Phase von durchstrahlendem Licht verändern und so die Objektpunkte rekonstruieren. Ein Lichtmodulatormittel umfasst eine derartige Matrix. Das Lichtmodulatormittel kann beispielsweise diskret als akusto-optischer Modulator AOM oder auch kontinuierlich ausgeführt sein. Eine Ausführung zur Rekonstruktion der Hologramme durch Amplitudenmodulation kann mit einem Liquid Crystal Display (LCD) erfolgen. Die vorliegende Erfindung bezieht sich ebenso auf weitere steuerbare Vorrichtungen, um hinreichend kohärentes Licht zu einer Lichtwellenfront oder zu einem Lichtwellenrelief zu modulieren.

Die Bezeichnung Pixel umfasst ein steuerbares Hologramm-Pixel des Lichtmodulators, repräsentiert einen diskreten Wert des Hologrammpunktes und ist einzeln adressiert und gesteuert. Jedes Pixel repräsentiert einen Hologrammpunkt des Hologramms. Im Falle eines LC-Displays bedeutet ein Pixel ein individuell ansteuerbares Display-Pixel. Für eine DMD (Digital Micromirror Device, Mikrospiegelarray), z.B. DLP (Digital Light Processing), ist ein Pixel ein individuell steuerbarer Mikrospiegel oder eine kleine Gruppe davon. Bei einem kontinuierlichen Lichtmodulator umfasst ein Pixel eine imaginäre Region, welche den Hologrammpunkt repräsentiert. Bei einer Farbdarstellung wird in der Regel ein Pixel in mehrere Subpixel unterteilt, welche die Grundfarben repräsentieren.

Der Begriff "Transformation" ist so weit auszulegen, dass er jede mathematische oder rechnerische Technik einschließt, die einer Transformation gleichkommt oder diese annähert. Transformationen im mathematischen Sinne sind lediglich Annäherungen physikalischer Prozesse, die genauer durch die Maxwellschen Wellenausbreitungsgleichungen beschrieben werden. Transformationen wie etwa Fresneltransformationen oder die spezielle Gruppe von Transformationen, die als Fouriertransformationen bekannt sind, beschreiben Annäherungen zweiter Ordnung. Transformationen führen in der Regel auf algebraische und nicht differentielle Beschreibungen und können folglich rechentechnisch effizient und performant gehandhabt werden. Überdies können sie präzise als optische Systeme modelliert werden.

WO 2006/066919 des Anmelders beschreibt ein Verfahren zum Berechnen von Videohologrammen. Es basiert im Wesentlichen darauf, eine Zerlegung der Szene in Ebenenschnitte parallel zur Ebene eines Lichtmodulators durchzuführen und alle Ebenenschnitte innerhalb der Betrachterebene in einen Sichtbarkeitsbereich zu transformieren und dort aufzusummieren. Anschließend werden die summierten Ergebnisse in die Hologrammebene, in welcher auch der Lichtmodulator liegt, zurück transformiert und so die komplexen Hologrammwerte des Videohologramms ermittelt.

DE 10 2006 025 096 beschreibt ein Verfahren zum Rendern und Generieren von Videohologrammen aus Bilddaten mit Tiefeninformation in Echtzeit, wobei in einem ersten Modus eine 3D-Rendering-Graphikpipeline Pixelwerte für die steuerbaren Pixel eines Monitors generiert. Es ist dadurch gekennzeichnet, dass die Pipeline schaltbar derart erweitert ist, dass in einem zweiten Modus in mindestens einer holographischen Pipeline die Generierung komplexer Hologrammwerte als Pixelwerte für einen Spatial Light Modulator SLM erfolgt, wodurch gleichzeitig oder alternativ zur üblichen grafischen Darstellung durch das Ansteuern des Spatial Light Modulators mit den Hologrammwerten ein einfallendes Wellenfeld so moduliert wird, dass durch Interferenz im Raum die gewünschte dreidimensionale Szene rekonstruiert wird.

Der Artikel von H. Takahashi et al. in Proc. of the SPIE 2406, 220-225, offenbart ein Verfahren zum Generieren von Videohologrammen, bei dem auf einem Lichtmodulator ein Gesamthologram kodiert wird und zu jedem Objektpunkt ein Subhologramm ermittelt und mehrere Objektpunkte zu einem Teilobjekt zusammengefasst werden.

DE 10 2006 042 324 beschreibt ein Verfahren zum Generieren von Videohologrammen in Echtzeit. Es nutzt das Prinzip, dass die Rekonstruktion eines einzelnen Objektpunkts nur ein Subhologramm als Teilmenge des auf dem SLM kodierten Gesamthologramms erfordert. Es ist dadurch charakterisiert, dass für jeden Objektpunkt die Beiträge der Subhologramme aus Look-Up-Tabellen bestimmbar sind und die Subhologramme zu einem Gesamthologramm zur Rekonstruktion der gesamten Szene akkumuliert werden.

Die genannten Verfahren erlauben eine rasche Generierung der Hologrammwerte. Es ist jedoch erforderlich, die 3D-Rendering-Graphikpipeline in weiterführende Betrachtungen einzubeziehen. Als Ergebnis einer 3D-Rendering-Graphikpipeline, welche die Umwandlung einer 3D-Szene zu gerasterten Bilddaten als 2D-Projektion der 3D-Szene beschreibt, liegt das Ergebnis in zwei Speicherbereichen, dem Framebuffer und dem Z-Buffer, vor: Der Framebuffer enthält die Farbwerte bzw. Farbinformation, die so genannte Color-Map der Szene, welche der Betrachter sieht. Der Z-Buffer enthält die Tiefenmap bzw. Tiefeninformation der Szene in einer normierten Darstellung, so wie sie vom Standort des Betrachters aus gesehen wird. Diese Daten sind die Eingangsdaten für die nachfolgende holographische Pipeline, welche komplexe Hologrammwerte als Pixelwerte für den Lichtmodulator generiert. Erst wenn das Ergebnis der 3D-Rendering-Graphikpipeline im Ganzen vorliegt, also die gerasterten Bilddaten im Framebuffer und Z-Buffer vollständig ermittelt sind, kann eine holographische Transformation erfolgen. Bevor eine holographische Transformation möglich ist, muss von der 3D-Rendering-Graphikpipeline die gesamte dreidimensionale Szene gerendert und müssen die gerasterten Bilddaten vollständig erzeugt sein. Die genannten Pipelines werden sequentiell ausgeführt, woraus sich der Nachteil einer längeren Berechnungszeit ergibt. Als Folge der langen Berechnungszeit können beispielsweise Videosequenzen nicht in der gewünschten Wiederholfrequenz dargeboten werden.

Analog zur herkömmlichen Videotechnik ist jedoch eine hohe Rate der Bildwiederholung für die Anzeige der Videohologramme wünschenswert und unerlässlich. Aufgrund der Vielzahl der notwendigen Berechnungsschritte ist die Generierung der Videohologramme überdies mit hohem Rechenaufwand verbunden und erfordert hoch performante und kostspielige Rechheneinheiten.

Es ist Aufgabe der Erfindung, die Nachteile im Stand der Technik zu beseitigen und ein Verfahren zu schaffen, wobei die bisherige sequentielle Abarbeitung der 3D-Rendering-Graphikpipeline und der holographischen Pipeline vermieden wird. Die erforderliche Berechnungszeit soll nachhaltig verringert werden. Resultierend soll der wirtschaftliche und technische Aufwand für die Berechnungsmittel reduziert werden. Im Weiteren soll die Architektur aktueller Grafikkarten beziehungsweise 3D-Pipelines durch zusätzliche Hard- und Softwaremodule erweitert werden, um die Durchführung des Verfahrens, und somit die Generierung der Videohologramme in Echtzeit zu gewährleisten.

Diese Aufgabe wird durch das erfindungsgemäße Verfahren nach Anspruch 1 und eine dafür angepasste Berechnungseinheit gemäß Anspruch 11 gelöst. Bevorzugte Ausführungsformen der Erfindung sind in den abhängigen Ansprüchen definiert.

Das Verfahren dient zum Generieren von Videohologrammen in Echtzeit zur Erweiterung einer 3D-Rendering-Graphikpipeline, welche die Umwandlung der 3D-Szene zu gerasterten Bilddaten als 2D-Projektion der 3D-Szene beschreibt.

Im Weiteren erfolgt in einer holographischen Pipeline die Generierung komplexer Hologrammwerte als Pixelwerte für einen Lichtmodulator einer holographischen Wiedergabeeinrichtung mit mindestens einem Lichtmodulatormittel, in welches eine in Objektpunkte zerlegte Szene als Gesamthologramm kodiert wird und als Rekonstruktion von einem Sichtbarkeitsbereich aus zu sehen ist, der innerhalb eines Periodizitätsintervalls der Rekonstruierten des Videohologramms liegt, wobei der Sichtbarkeitsbereich zusammen mit jedem zu rekonstruierenden Objektpunkt der Szene ein Subhologramm definiert und das Gesamthologramm aus einer Überlagerung von Subhologrammen gebildet wird, und eine 3D-Rendering-Graphikpipeline eine durch Bilddaten mit Tiefeninformation repräsentierte Szene in Objektpunkte strukturiert und nachfolgend für die Objektpunkte mindestens Farb- und Tiefeninformationen ermittelt und bereitstellt. Einer derartigen holographischen Wiedergabeeinrichtung mit entsprechenden Lichtmodulatormitteln liegt dabei das Prinzip zugrunde, die mit Informationen von Objektpunkten einer Szene modulierten Wellenfronten in wenigstens einem Sichtbarkeitsbereich zu überlagern. Die Begriffsbestimmungen zum Sichtbarkeitsbereich wurden bereits erläutert.

Einer solchen holographischen Wiedergabeeinrichtung liegt ebenso wie der Erfindung das Prinzip zugrunde, dass die Rekonstruktion eines einzelnen Objektpunkts einer Szene jeweils nur ein Subhologramm als Teilmenge des am Lichtmodulatormittel kodierten Gesamthologramms erfordert.

Ein einzelner Objektpunkt wird jeweils durch ein Subhologramm erzeugt, dessen Lage von der Position des Objektpunkts und dessen Größe von der Position des Betrachters abhängt. Der Bereich des Subhologramms auf dem Lichtmodulatormittel wird nachfolgend als Modulatorbereich bezeichnet. Der Modulatorbereich ist jener Teilbereich des Lichtmodulatormittels, welcher erforderlich ist, um den Objektpunkt zu rekonstruieren. Der Modulatorbereich beschreibt gleichzeitig, weiche Pixel auf dem Lichtmodulator entsprechend angesteuert werden müssen, um diesen Objektpunkt zu rekonstruieren. Die Position des Modulatorbereichs bleibt fest, wenn es sich um einen so genannten ortsfesten Objektpunkt handelt. Dabei ändert der zu rekonstruierende Objektpunkt seine Lage in Abhängigkeit von der Betrachterposition. Durch Änderung des Modulatorbereichs in Abhängigkeit der Betrachterposition wird erreicht, dass der Objektpunkt ortsfest kodiert wird, das heißt, er ändert seine räumliche Lage in Abhängigkeit der Betrachterposition nicht. In Bezug auf die Erfindung können diese Prinzipien analog behandelt werden. Das Zentrum des Modulatorbereichs liegt in einer einfachsten Lösungsmöglichkeit auf der Geraden durch den zu rekonstruierenden Objektpunkt und das Zentrum des Sichtbarkeitsbereichs. Die Größe des Modulatorbereichs wird in einer einfachsten Lösungsmöglichkeit mit Hilfe des Strahlensatzes ermittelt, wobei der Sichtbarkeitsbereich durch den zu rekonstruierenden Objektpunkt auf das Lichtmodulatormittel rückverfolgt wird.

Auch bei der vorteilhaften Verwendung von Subhologrammen gilt, dass ein Pixel, als kleinste steuerbare Einheit des Lichtmodulatormittels, nicht nur die Information eines einzelnen Subhologramms, sondern als Resultat der Überlagerungen die Informationen mehrerer Subhologramme enthält.

Als Ergebnis einer 3D-Rendering-Graphikpipeline, welche die Umwandlung einer 3D-Szene zu gerasterten Bilddaten als 2D-Projektion der 3D-Szene beschreibt liegt die Beschreibung in zwei Speicherbereichen, dem Framebuffer und dem Z-Buffer vor.

Der Erfindung liegt der Gedanke zugrunde, dass für jeden gemäß der Betrachterposition sichtbaren Objektpunkt, für den die Rasterisierung der 3D-Rendering-Graphikpipeline abgeschlossen ist und mindestens die zugehörige Farb- und Tiefeninformation vorliegt, umgehend das zu diesem Objektpunkt zugehörige Subhologramm ermittelt und einem Gesamthologramm aufaddiert wird. Für jeden von der 3D-Rendering-Graphikpipeline fertig gerenderten Objektpunkt werden somit sofort mittels der holographischen Pipeline mit den Subhologrammen, respektive dem Gesamthologramm, die Hologrammwerte generiert. Dem Gedanken der Erfindung folgend muss beachtet werden, dass die Szene von der 3D-Rendering-Graphikpipeline noch nicht zur Gänze fertig ermittelt wurde. Somit sind nachträgliche Änderungen von Objektpunkten, insbesondere Sichtbarkeit, Farbe, Helligkeit nicht ausgeschlossen. Beispielsweise kann sich die Sichtbarkeit eines Objektpunkts im Zuge des Renderns der ganzen Szene ändern, indem ein bisher sichtbarer Objektpunkt durch einen noch näher beim Betrachter liegenden Objektpunkt nunmehr verdeckt wird.

In gleicher Weise liegt der Erfindung das Prinzip zugrunde, ein Gesamthologramm mit einem Beitrag eines Objektpunkts, dessen Eigenschaften sich jedoch im Zuge des weiteren Renderns geändert haben, ebenso zu korrigieren.

In einer Ausgestaltung der Grundgedanken der Erfindung umfasst das Verfahren die Schritte, dass von der holographischen Pipeline für jeden gemäß der Betrachterposition sichtbaren Objektpunkt, für welchen Tiefen- und Farbinformation erstmals vorliegen oder aktuell aktualisiert werden,

- (A) umgehend das zu diesem aktuellen bzw, sichtbaren Objektpunkt zugehörige Subhologramm und, falls durch diesen sichtbaren Objektpunkt (OPN) ein anderer Objektpunkt (OPX) nicht mehr sichtbar und nunmehr obsolet ist, das zugehörige Differenzsubhologramm (SD) mit (SD = SHN-SHX) als Differenz des zugehörigen Subhologramms des aktuellen Objektpunkts und des Subhologramms des nunmehr obsoleten bzw. nicht mehr sichtbaren Objektpunkts ermittelt werden,

- (B) das Subhologramm (SHN) des sichtbaren Objektpunktes (OPN) oder, falls in Schritt (A) ermittelt, das Differenzsubhologramm zum Gesamthologramm ($H\Sigma_{SLM}$) aufaddiert wird, und

- (C) die Informationsverknüpfung des aktuellen Objektpunkts und dessen Subhologramms in mindestens einem Subhologrammspeicher abrufbar gemacht wird. Das Subhologramm kann physisch in den Subhologrammspeicher eingetragen werden. Es ist ebenso möglich, diese Informationsverknüpfung durch Verweise, Index- und Speicherbereiche oder dergleichen abrufbar zu machen.

Das Gesamthologramm wird wunschgemäß kompensiert. Analog dem vorhergehenden Verfahrensschritt wird die Informationsverknüpfung des aktuellen Objektpunkts und dessen Subhologramms wiederum im Subhologrammspeicher abrufbar gemacht.

Das Differenzsubhologramm eines aktuellen Objektpunkts und eines obsoleten Objektpunkts ist mit (SD = SHN-SHX) als Differenz des zugehörigen aktuellen Subhologramms und des obsoleten Subhologramms ermittelbar. Dabei ist das Differenzsubhologramm von Objektpunkten gemäß der aktualisierten Tiefeninformation

(a) mit (SD = SHN-SHX) durch die Differenz des Subhologramms eines näher am Betrachter liegenden Objektpunkts und des Subhologramms eines nunmehr davon überdeckten, nicht mehr sichtbaren Objektpunkts, oder umgekehrt

(b) mit (SD = SHN-SHX) durch die Differenz des Subhologramms eines ferner vom Betrachter liegenden Objektpunkts und des Subhologramms eines bisher sichtbaren Objektpunkts festgelegt.

Vorzugsweise wird zur Ermittlung des Differenzsubhologramms des aktuellen Objektpunkts und des obsoleten Objektpunkts das Subhologramm des obsoleten Objektpunkts aus dem Subhologrammspeicher abgerufen und zur Berechnung angewandt. Bei der Ermittlung der Differenzsubhologramme ist vorausgesetzt, dass am Anfang der Berechnungsschritte alle Subhologramme im Subhologrammspeicher zu Nullwerten initialisiert werden. Damit ist gewährleistet, dass das Differenzsubhologramm mit SD = SHN-SHX auch für Objektpunkte gültig ist, deren Tiefeninformationen erstmals vorliegen. In diesem Fall ist das Subhologramm SHX des obsoleten Objektpunkts null und geht nicht in die Differenzbildung ein.

Daraus ist ersichtlich, dass die Algorithmik für alle Objektpunkte gleich ist, unabhängig davon, ob deren Tiefeninformation erstmals ermittelt oder aktualisiert wurde. Eine Fallunterscheidung zur Lage des Objektpunkts zum Betrachter oder dergleichen ist nicht erforderlich. Mit Vorteil kann diese Algorithmik in dedizierte Berechnungseinheiten implementiert werden, so dass eine hoch performante Berechnung gewährleistet ist.

Schließlich liegt den Verfahrensschritten das Prinzip zugrunde, dass die Generierung der Hologrammwerte für die Subhologramme rasch erfolgt. Auf diesbezügliche, besonders bevorzugte Verfahren wird in den Ausführungsbeispielen verwiesen.

Vorerst wird der Subhologrammspeicher näher spezifiziert. Als Ergebnis der 3D-Rendering-Graphikpipeline wird die 3D-Szene im Framebuffer und dem Z-Buffer rasterisiert abgelegt, wobei sich diese Rasterung mit m-Zeilen und n-Spalten in der Regel an der Auflösung des Displays orientiert. Diese Rasterisierung wird vorzugsweise für den Subhologrammspeicher übernommen, so dass ein Elementeintrag im Raster, welcher mit einem entsprechenden Eintrag im Framebuffer und im Z-Buffer korrespondiert, einem Subhologramm entspricht. Andersartig orientierte Speicherarchitekturen sind denkbar, wobei hier gegebenenfalls im Subhologrammspeicher ebenso Informationen zum Objektpunkt abgelegt werden. Eine derartige Informationsverknüpfung eines Objektpunkts zu dessen Subhologramm umfasst beispielsweise einen Verweis auf die Daten, auf entsprechende Speicherbereiche oder dergleichen. Zusätzlich sind hilfestellende, beschreibende Daten wie Größe, Lage, Indexlisten, Indexbereiche in verschiedenen Bezugssystemen denkbar, die einen raschen Datenzugriff sowie vorteilhafte Algorithmentechnik erlauben beziehungsweise erleichtern.

Die Subhologramme eines Objektpunkts werden vorzugsweise, dem Prinzip von DE 10 2006 042 324 folgend, aus Look-Up-Tabellen ermittelt beziehungsweise ausgelesen oder analytisch nach dem bereits zitierten Verfahren nach WO 2006/066919 generiert. Vorzugweise werden nach dem Prinzip des letztgenannten Verfahrens ebenso die Look-Up-Tabellen für die Subhologramme generiert beziehungsweise vorab erstellt. Zur Erstellung der Look-Up-Tabellen wird vorab für jeden möglichen Objektpunkt im zulässigen Bewegungsbereich des Betrachters der zugehörige Eintrag des Subhologramms generiert und somit abrufbar gemacht. Ein weiteres, besonders bevorzugtes Verfahren wird in den Ausführungsbeispielen erläutert. Zur Durchführung des Verfahrens wird die 3D-Rendering-Graphikpipeline durch die so genannte holographische Pipeline erweitert, welche die genannten Verfahrensschritte implementiert. Der hier zusammenfassend erläuterte Ablauf des Verfahrens impliziert nicht, dass sich die erforderlichen Recheneinheiten (Hardware) für die Hologrammberechnung physisch separat an die Berechnungseinheiten für die 3D-Berechnung anschließen müssen. Es ist ebenso vorstellbar, dass bei programmierbaren Grafikkarten neuerer Generation die Hologrammberechnung in den Berechnungseinheiten (Hardware) der 3D-Berechnung ausgeführt wird. Die Implementierung dieser Lösung erfolgt vorzugsweise auf demselben Graphiksystem beziehungsweise Graphikchip, wo bereits die 3D-Rendering-Graphikpipeline ausgeführt wird. Die Implementierung auf einem zusätzlichen Chip ist ebenso möglich. Beide Verarbeitungseinheiten können auf denselben physischen Speicher der Graphikkarte zugreifen, so dass neben dem Z-Buffer, der Color-Map und anderen Daten für die 3D-Rendering-Graphikpipeline auch zusätzliche Daten für die holographische Pipeline gespeichert werden können. Insbesondere durch die Verwendung der Look-Up-Tabellen für die Subhologramme wird die Anforderung an die Generierung der Hologrammwerte in Echtzeit gesichert. Ist die Zeitspanne für die Kalkulation eines Objektpunkts durch die 3D-Rendering-Graphikpipeline größer oder gleich der Berechnungszeit für die holographische Transformation und Kodierung des Objektpunkts, so wird die Generierung der Hologrammwerte nachhaltig untermauert. Analog zur herkömmlichen Videotechnik kann eine hohe Rate der Bildwiederholung für die Anzeige der computergenerierten Videohologramme geboten werden, wobei auch kostengünstige und einfache Recheneinheiten die Generierung in Echtzeit gewähren können.

Die Erfindung erlaubt eine wahlfreie, nichtsequentielle Reihenfolge, in welcher die Objektpunkte von der 3D-Rendering-Graphikpipeline abgearbeitet werden. Eine analoge Freiheit liegt für jene Reihenfolge vor, in welcher die Ergebnisse der Pipeline für die einzelnen Objektpunkte letztlich vorliegen müssen. Eine Vielzahl von Objektpunkten kann somit gleichzeitig in parallelisierten Prozessen gerendert und der holographischen Pipeline zur Verfügung gestellt werden. Selbstverständlich liegen den Methoden, wie und in welcher Reihenfolge die Objektpunkte, also letztlich die ganze Szene gerendert wird, bekannte Verfahren und Optimierungen zugrunde.

Die Ausgestaltung der Erfindung wird nachfolgend in bevorzugten Ausführungsformen weiterführend beschrieben. In den zugehörigen Figuren zeigen

Fig. 1a    das zugrunde liegende Prinzip einer holographischen Wiedergabeeinrichtung,
Fig. 1b    das Differenzsubhologramm für einen hinzutretenden Objektpunkt,
Fig. 1c    das Differenzsubhologramm für einen verschwindenden Objektpunkt,
Fig. 2     einen Ablaufplan des erfindungsgemäßen Verfahrens und eine Schemadarstellung der erfindungsgemäßen Einrichtung

Im Weiteren wird ein besonders bevorzugtes Verfahren zur Generierung komplexer Hologrammwerte von Subhologrammen erläutert. Die diesbezüglichen Figuren zeigen

Fig. B1    das zugrunde liegende Prinzip einer holographischen Wiedergabeeinrichtung und einen Modulatorbereich eines Objektpunkts,
Fig. B2a   die Wiedergabeeinrichtung in einer Seitenansicht mit einem Abbildungselement aus Linse und Prisma,
Fig. B2b   einen Modulatorbereich und ein vertikal wirkendes Prisma,
Fig. B2c   einen Modulatorbereich und ein horizontal wirkendes Prisma,
Fig. B3    einen Ablaufplan des erfindungsgemäßen Verfahrens und
Fig. B4    eine Variante des Verfahrens zur Rekonstruktion eines Objektpunkts hinter der Hologrammebene

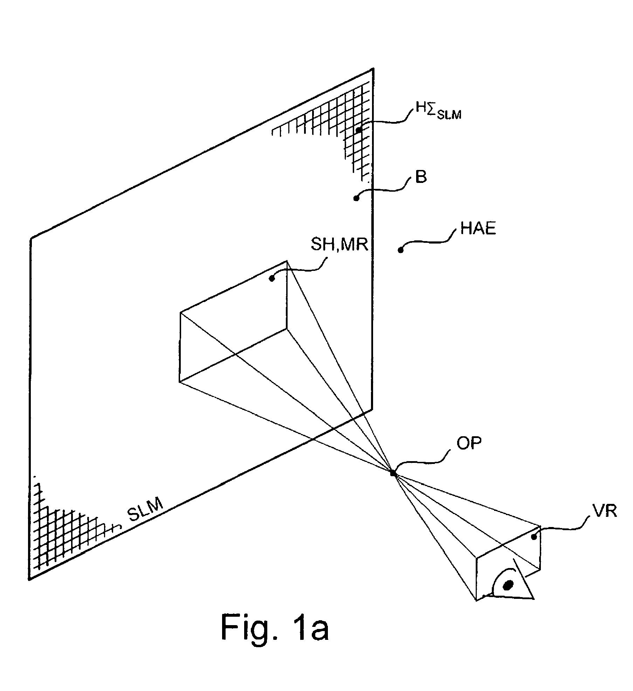

Fig. 1a veranschaulicht das zugrunde liegende Prinzip einer holographischen Wiedergabeeinrichtung (HAE) für einen Betrachter. Das Prinzip ist für mehrere Betrachter analog. Die Position eines Betrachters ist dabei durch die Position seiner Augen, respektive seiner Pupillen (VP) charakterisiert. Die Einrichtung enthält ein Lichtmodulatormittel (SLM), welches zur einfacheren Darstellung in dieser Ausführungsform gleich dem Bildschirmmittel (B) ist, und überlagert die mit Informationen von Objektpunkten einer Szene (3D-S) modulierten Wellenfronten in wenigstens einem Sichtbarkeitsbereich (VR). Der Sichtbarkeitsbereich ist den Augen nachgeführt. Die Rekonstruktion eines einzelnen Objektpunkts (OP) einer Szene (3D-S) erfordert dabei jeweils nur ein Subhologramm (SH) als Teilmenge des auf Lichtmodulatormitteln (SLM) kodierten Gesamthologramms ($H_{\Sigma SLM}$). Der Bereich des Subhologramms auf dem Lichtmodulator (SLM) ist der Modulatorbereich (MR). Wie aus dieser Figur ersichtlich, ist der Modulatorbereich (MR) nur ein kleiner Teilbereich des Lichtmodulatormittels (SLM). Die Größe des Modulatorbereichs (MR) wird in einer einfachsten Lösungsmöglichkeit mit Hilfe des Strahlensatzes ermittelt, wobei der Sichtbarkeitsbereich (VR) durch den zu rekonstruierenden Objektpunkt (OP) auf das Lichtmodulatormittel (SLM) zurückverfolgt wird. Im Weiteren ergeben sich dadurch die Indices jener Pixel auf dem Lichtmodulatormittel (SLM), die zur Rekonstruktion dieses Objektpunkts erforderlich sind.

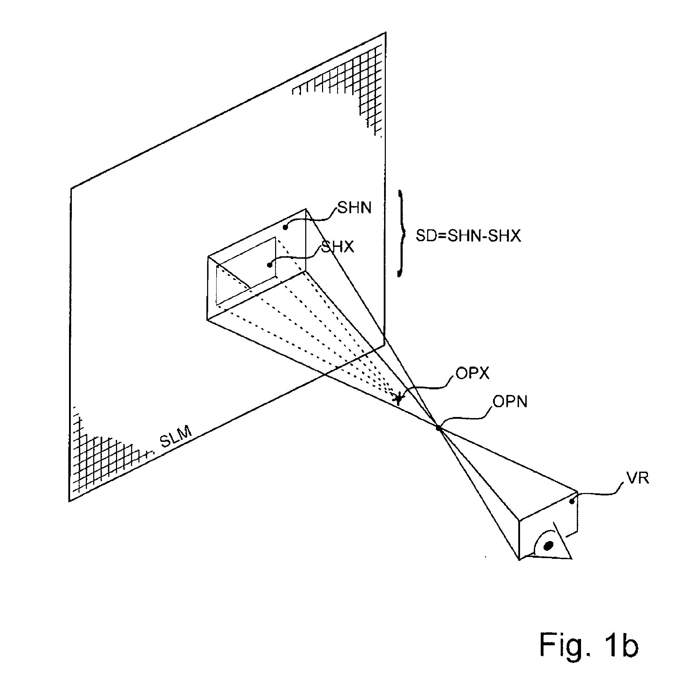

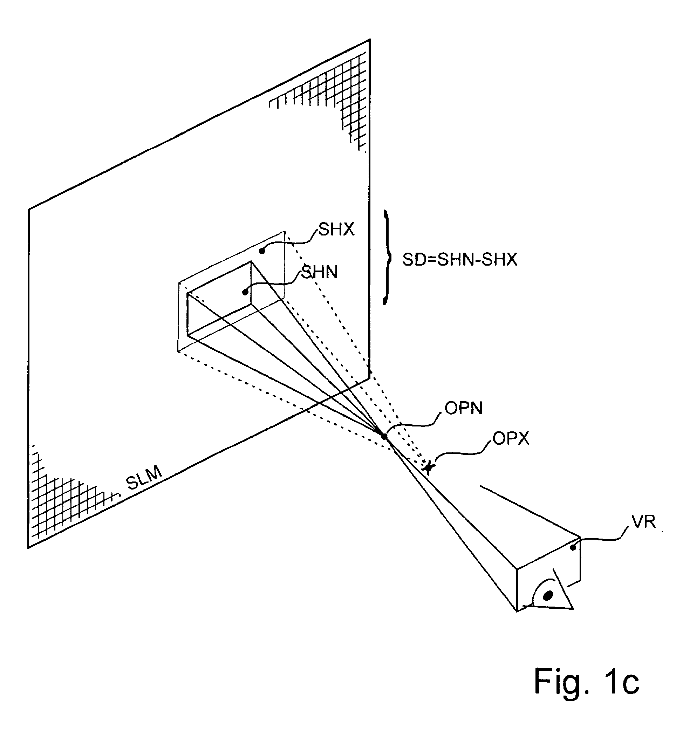

Die Figuren 1b und 1c veranschaulichen das Prinzip der Subhologramme als Grundprinzip der nachfolgenden Erläuterung des Verfahrens. Nach dem erfindungsgemäßen Verfahren wird für jeden gemäß der Betrachterposition (VP) sichtbaren Objektpunkt, für den die Rasterisierung der 3D-Rendering-Graphikpipeline abgeschlossen ist und mindestens die zugehörige Farb- und Tiefeninformation vorliegt, umgehend, also ohne weiteren Zeitverzug, das zu diesem Objektpunkt zugehörige Subhologramm (SH) ermittelt und zum Gesamthologramm ($H_{\Sigma SLM}$) aufaddiert. Die umgehende Verarbeitung des zugehörigen Subhologramms (SH) bedeutet jedoch, dass sich im Zuge des Rendering-Prozesses der Szene beispielsweise die Sichtbarkeit eines Objektpunkts (OP) verändern kann. Beispielsweise wird ein Objektpunkt durch einen noch näher liegenden überdeckt, oder er wird durch einen der zahlreichen Bildeffekte (Schattierungen, Spiegelungen, Nebel und dergleichen) wieder unsichtbar.

In Fig. 1b wurde von der 3D-Rendering-Graphikpipeline zu einem Objektpunkt (OPX) festgestellt, dass ein neuer Objektpunkt (OPN) noch näher am Betrachter liegt. Dadurch ist, verallgemeinert dargestellt, in der aktuellen gerenderten Szene gegenüber einem vorgehenden Zwischenergebnis der 3D-Rendering-Graphikpipeline ein neuer Objektpunkt (OPN) dazugekommen, welcher jedoch, wie aus der Figur ersichtlich, gemäß der Sichtbarkeit des Betrachters einen im Zwischenergebnis sichtbaren Objektpunkt (OPX) überdeckt, so dass dieser nunmehr unsichtbar wird. Wie nachfolgend noch erläutert, ist es hier erforderlich, vom Gesamthologramm ($H\Sigma_{SLM}$), welches die Überlagerung der Subhologramme der Objektpunkte ist, das obsolete Subhologramm (SHX) des unsichtbaren Objektpunkts (OPX) zu subtrahieren und das neue Subhologramm (SHN) des nunmehr sichtbaren Objektpunkts (OPN) zu addieren. In diesem Fall ist das Differenzsubhologramm (SD = SHN-SHX) als Differenz des Subhologramms (SHX) des obsoleten Objektpunkts (OPX) und des Subhologramms (SHN) des neuen Objektpunkts (OPN) festgelegt und ermittelbar.

In Fig. 1c ist in der aktuellen gerenderten Szene gegenüber einem vorhergehenden Zwischenergebnis der 3D-Rendering-Graphikpipeline ein Objektpunkt (OPX) weggefallen, so dass, wie aus der Figur ersichtlich, gemäß der Sichtbarkeit des Betrachters ein bisher verdeckter Objektpunkt (OPN) nunmehr sichtbar wird. In diesem Fall ist das Differenzsubhologramm (SD = SHN-SHX) als Differenz des Subhologramms (SHX) des fehlenden Objektpunkts (OPX) und des Subhologramms (SHN) des nunmehr sichtbaren Objektpunkts (OPN) festgelegt und ermittelbar. Analog zu Fig. 1b ist das Gesamthologramm ($H\Sigma_{SLM}$) entsprechend aufzudatieren. Ohne Figur ist der dritte Fall eines ortsfesten Objektpunkts mit unterschiedlicher Farbe und/oder Helligkeit erwähnt. Hier beschreibt das Differenzsubhologramm die entsprechenden Farb- oder Helligkeitsinformationen. In der Regel ist es jedoch ausreichend, diese Änderungen anstelle eines Subhologramms durch deskriptive Daten zu detaillieren.

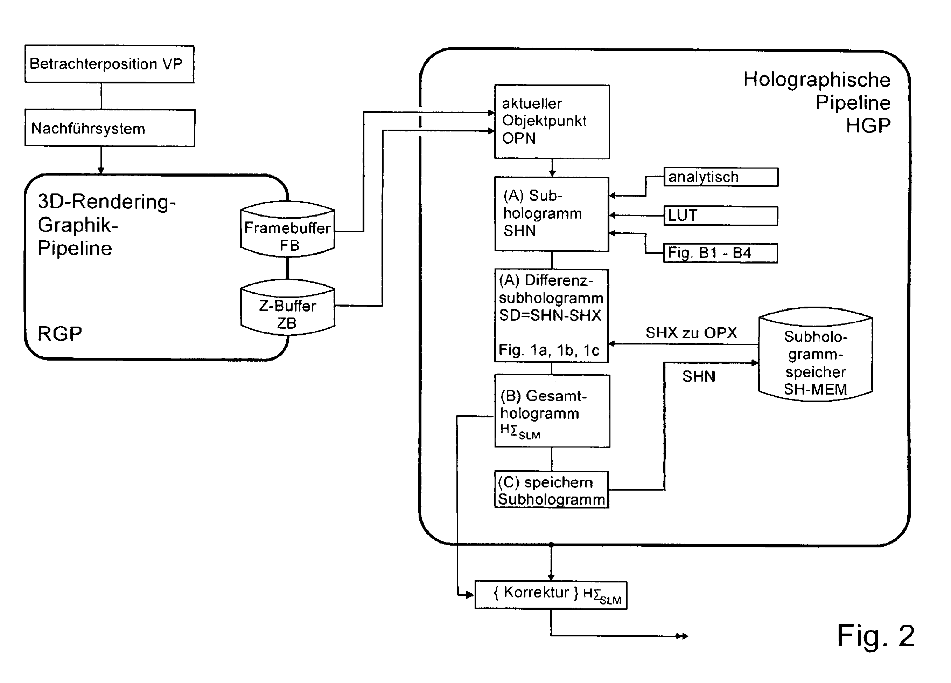

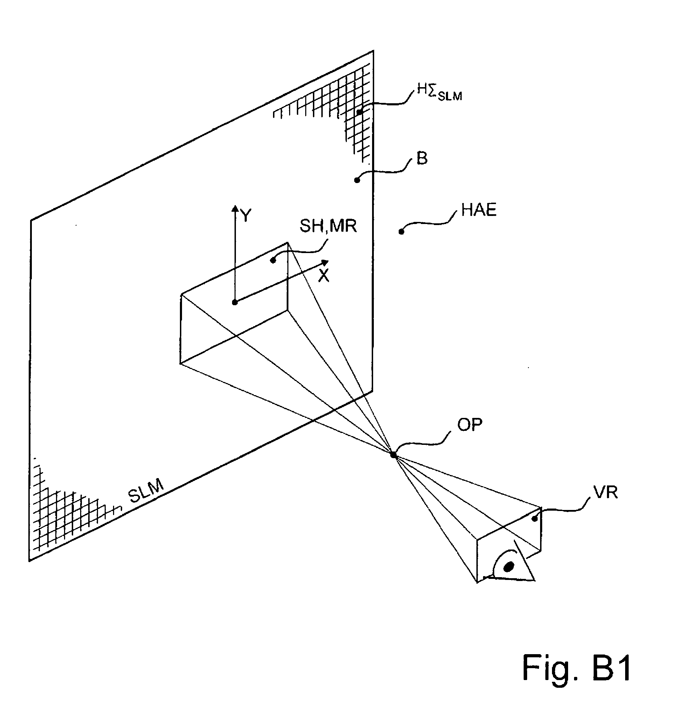

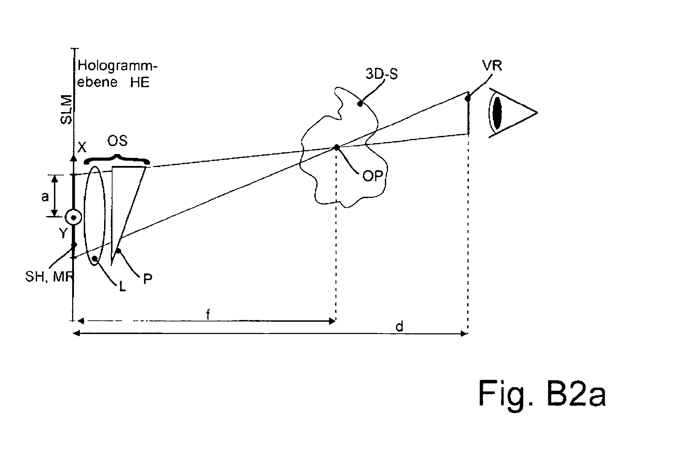

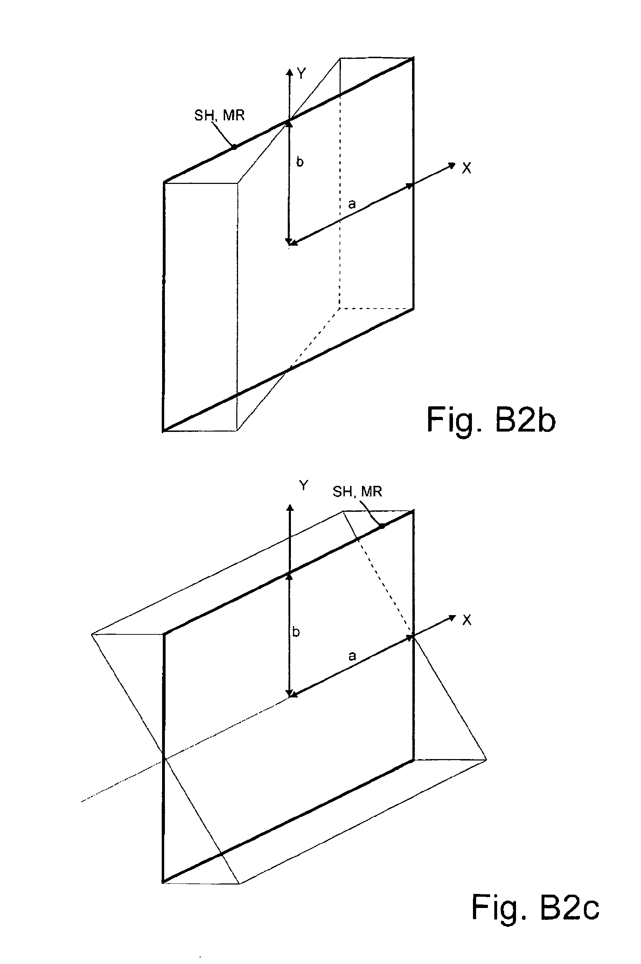

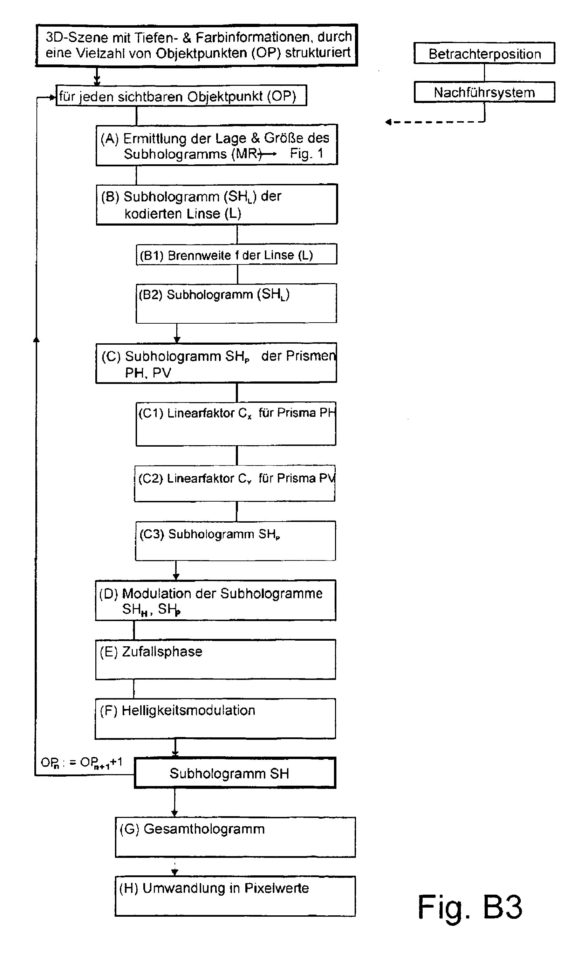

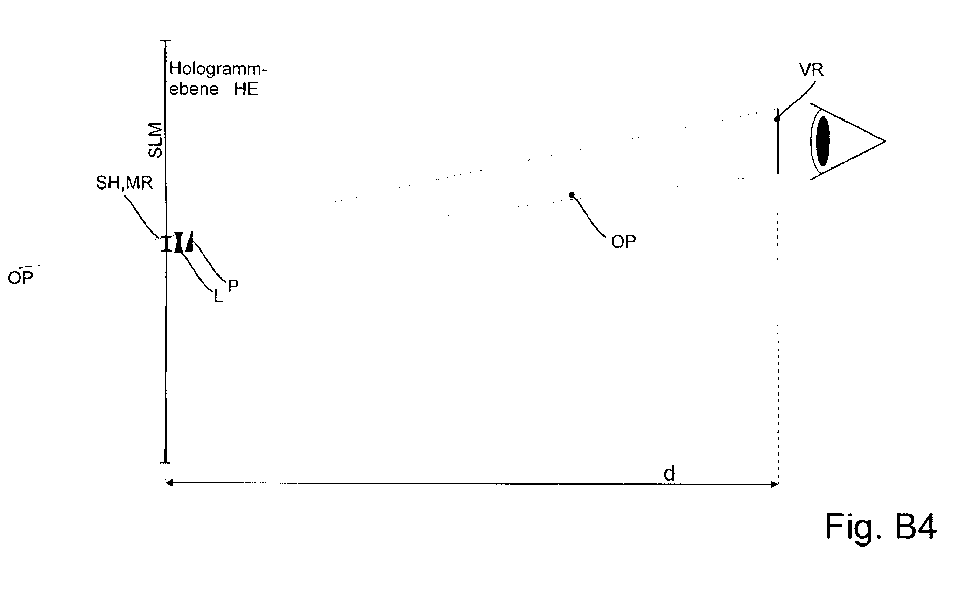

Fig. 2 veranschaulicht das Verfahren zur Generierung des Gesamthologramms ($H\Sigma_{SLM}$) und zeigt wie eine 3D-Rendering-Graphikpipeline (RGP) mit einer holographischen Pipeline (HGP) erweitert wird, um aus den Bilddaten mit Tiefeninformationen die komplexen Hologrammwerte für den Lichtmodulator (SLM) der holographischen Wiedergabeeinrichtung (HAE) zu generieren. Damit ist ebenso die Einrichtung zur Durchführung des Verfahrens skizziert. In der 3D-Rendering-Graphikpipeline (RGP) erfolgt beispielsweise die Umrechnung von Bildschirmkoordinaten in Gerätekoordinaten, Texturierung, Clipping, sowie das Antialiasing. Als Ergebnis der 3D-Rendering-Graphikpipeline (RGP), welche die Umwandlung der 3D-Szene (3D-S) zu gerasterten Bilddaten als 2D-Projektion der Szene beschreibt, liegt das Ergebnis in zwei Speicherbereichen vor:

- Framebuffer (FB): enthält die Farbwerte, die so genannte Color-Map der Szene, welche der Betrachter sieht.
- Z-Buffer (ZB): enthält die so genannte Tiefenmap der Szene in einer normierten Darstellung, so wie sie vom Standort des Betrachters aus gesehen wird.

Zur besseren Erläuterung sind in Fig. 2 diese Speicherbereiche der Graphikpipeline, gesondert eingezeichnet und schematisch dargestellt. Diese Daten dieser Speicherbereiche sind die Eingangsdaten für die nachfolgende holographische Pipeline (HGP), wodurch die Generierung der komplexen Hologrammwerte für die gesamte 3D-Szene erfolgt.

Erfindungsgemäß wird nicht mehr solange gewartet, bis die komplette Z-Map und Color-Map der gesamten Szene vorliegt, sondern die holographischen Berechnungen zum Objektpunkt werden unmittelbar ausgeführt, sobald mindestens die Tiefen- und Farbinformation des Objektpunkts, der durch die 3D-Pipeline verarbeitet wurde, bereitsteht.

Nach dem erfindungsgemäßen Verfahren wird für jeden gemäß der Betrachterposition (VP) sichtbaren Objektpunkt (OP), für den die Rasterisierung der 3D-Rendering-Graphikpipeline abgeschlossen ist und mindestens die zugehörige Farb- und Tiefeninformation vorliegt, umgehend, also ohne weiteren Zeitverzug, das zu diesem Objektpunkt (OPN) zugehörige Subhologramm (SHN) ermittelt und zum Gesamthologramms ($H\Sigma_{SLM}$) aufaddiert. Die Verfahrensgruppe "Rasterisierung" der 3D-Rendering-Graphikpipeline (RGP) und die Verfahrensgruppe zur Generierung der Hologrammwerte durch die holographische Pipeline (HGP) verlaufen zeitgleich.

In dieser Ausführungsform werden die Subhologramme (SH) zur Propagation der Lichtwellen in den Sichtbarkeitsbereich (VR), siehe Fig. 1, aus Look-Up-Tabellen (LUT) bestimmt. Ein weiteres, besonders bevorzugtes Verfahren zur Generierung der Subhologramme wird im Anschluss weiterführend erläutert. Für jeden von der 3D-Rendering-Graphikpipeline fertig gerenderten Objektpunkt (OP), für welchen Tiefen- und Farbinformation erstmals vorliegen oder aktuell aktualisiert werden, wird umgehend das zu diesem aktuellen Objektpunkt (OPN) zugehörige Subhologramms (SHN) und das zugehörige Differenzsubhologramm (SD) ermittelt. Wie bereits anhand der Figuren 1b und 1c erläutert wird das Differenzsubhologramm (SD) mit (SD = SHN-SHX) als Differenz des zugehörigen Subhologramms (SHN) des aktuellen Objektpunkts (OPN) und des Subhologramms (SHX) des nunmehr obsoleten Objektpunkts (OPX) ermittelt. Das zur Differenzbildung erforderliche Subhologramm (SHX) des obsoleten Objektpunkts (OPX) wird aus dem Subhologrammspeicher (SH-MEM) abgerufen. Die einzelnen Subhologramme der Objektpunkte sind superponierbar können zum Gesamthologramm komplex aufaddiert werden.

Gesamthologramm = komplexe Summe der Subhologramme mit

$$H\Sigma_{SLM} = \Sigma\ SH_i$$

In gleicher Weise sind die Differenzsubhologramme superponierbar.

Schließlich wird das ermittelte Subhologramm (SHN) des aktuellen Objektpunkts (OPN) in den Subhologrammspeicher (SH-MEM) abgelegt und abrufbar gemacht. Falls dieser Objektpunkt (OPN) aufgrund aktualisierter Daten der 3D-Rendering-Graphikpipeline wiederum obsolet wird, oder sich andere Eigenschaften ändern, welche die Korrektur des Gesamthologramms ($H\Sigma_{SLM}$) erforderlich machen, so steht das zugehörige Subhologramm (SH) im Subhologrammspeicher (SH-MEM) wiederum zur Verfügung.

Die Korrektur des Gesamthologramms ($H\Sigma_{SLM}$) wurde am Beispiel der Sichtbarkeit von Objektpunkten erläutert. In analoger Weise betrifft das Verfahren ebenso andere Eigenschaften der Objektpunkte, also Farbe, Helligkeit, Intensität. Im Weiteren können Korrekturen an das Gesamthologramm ($H\Sigma_{SLM}$) angewendet werden, um generell die Qualität der holographischen Darstellung zu erhöhen.

In einer weiteren Lösungsmöglichkeit ist es ist auch denkbar, das Gesamthologramm ($H\Sigma_{SLM}$) aufzuaddieren, nachdem für alle oder für nahezu alle Objektpunkte das zugehörige Subhologramm ermittelt und die entsprechende Informationsverknüpfung abgelegt wurde. Durch die anschließende Erstellung des Gesamthologramms wird jedoch die optimal erforderliche Berechnungszeit überschritten.

Insbesondere durch die Verwendung der Look-Up-Tabellen für die Subhologramme wird die Anforderung an die Generierung der Hologrammwerte in Echtzeit gesichert. Ist die Zeitspanne für das Rendern eines Objektpunkts durch die 3D-Rendering-Graphikpipeline größer als die für die Generierung der Transformation und Kodierung des Objektpunkts gemäß der Erfindung, so wird die Generierung der Hologrammwerte nachhaltig untermauert.

Eine in Fig. 2 getrennte Darstellung der 3D-Rendering-Graphikpipeline (RGP) und der holographischen Pipeline (HGP) dient der besseren Erläuterung des zugrunde liegenden Prinzips, bedeutet aber nicht notwendigerweise, dass die Berechnungsmittel räumlich getrennt sind. Die Implementierung des Verfahrens erfolgt vorzugsweise auf demselben Prozessor beziehungsweise Graphikchip, wo bereits die 3D-Rendering-Graphikpipeline ausgeführt wird. Mit Vorteil wird die 3D-Rendering-Graphikpipeline entsprechend hard- und softwaremäßig erweitert. Die Implementierung der holographischen Pipeline auf einem zusätzlichen Chip ist ebenso vorteilhaft möglich. Beide Verarbeitungseinheiten, also die 3D-Rendering-Graphikpipeline und die holographische Pipeline können auf denselben physischen Speicher der Graphikkarte zugreifen, so dass neben dem Z-Buffer, der Color-Map und anderen Daten für die 3D-Pipeline auch zusätzliche Daten gespeichert beziehungsweise ausgetauscht werden können. Vorzugsweise werden beispielsweise die Look-Up-Tabellen für die Subhologramme in diesen Speicherbereichen abgelegt.

In einer vorteilhaften Ausgestaltung der Erfindung liefert die holographische Wiedergabeeinrichtung deren Konfigurationsdaten an die Einrichtung zum Durchführen des Verfahrens. Diese Daten beschreiben beispielsweise die Größe des Lichtmodulators, dessen Auflösung, Pixel und gegebenenfalls beschreibende Daten zur Art der Kodierung, beispielsweise Burckhardt-Kodierung, Zwei-Phasen-Kodierung oder weitere geeignete Kodierungen. Damit kann die Generierung der Hologrammdaten auf die gegebene beziehungsweise erkannte holographische Wiedergabeeinrichtung parametriert und angepasst werden. Eine Einrichtung zur Durchführung des Verfahrens ist somit nicht nur auf eine spezielle holographische Wiedergabeeinrichtung beschränkt, sondern universell für Einrichtungen einsetzbar, weiche in vorteilhafter Weise das Grundprinzip der Subhologramme nutzen. Anhand der Figuren B1 bis B4 wird nachfolgend ein besonders bevorzugtes Verfahren zur Generierung der Subhologramme erläutert. Ausgangspunkt des Verfahrens ist eine dreidimensionale Szene (3D-S) mit Farb- und Tiefeninformationen, welche in eine Vielzahl von Objektpunkten strukturiert wird. Auch bei der vorteilhaften Verwendung von Subhologrammen gilt, dass ein Pixel, als kleinste steuerbare Einheit des Lichtmodulators, nicht nur die Information eines einzelnen Subhologramms, sondern als Resultat der Überlagerungen die Informationen mehrerer Subhologramme enthält.

Dem bevorzugten Verfahren liegt der Gedanke zugrunde, dass die komplexen Hologrammwerte eines Subhologramms aus der Wellenfront des jeweils zu rekonstruierenden Objektpunkts in einem Modulatorbereich des Lichtmodulatormittels ermittelt werden, indem die Transmissions- oder Modulationsfunktionen eines im Modulatorbereich modellierten Abbildungselements, in dessen Brennpunkt der zu rekonstruierende Objektpunkt liegt, berechnet und ausgewertet werden. Die Hologrammebene ist durch den Ort eines Bildschirmmittels festgelegt, wobei zur Vereinfachung in den nachfolgenden Erläuterungen das Bildschirmmittel der Lichtmodulator selbst ist.

In einer besonders bevorzugten Ausführungsform des Verfahrens umfasst das Abbildungselement eine in der Hologrammebene liegende Linse mit der Brennweite f, welche geneigt ist. Eine geneigte Linse ist eine Zusammensetzung aus einer in Bezug auf die Hologrammebene nicht geneigten Linse sowie einem vertikal und einem horizontal wirkenden Prisma. Streng genommen wird durch ein Prisma kein Subhologramm definiert, da durch die nichtfokale Prismenfunktion kein Objektpunkt rekonstruiert wird. Im Sinne der Klarheit des Erfindungsgedankens wird dies nachfolgend jedoch so bezeichnet, da das Prisma im Modulatorbereich ebenso einen Beitrag zu den komplexen Hologrammwerten liefert. Anhand einer Linse und eines Prismas wird das Verfahren nachfolgend weiter detailliert. Es ist selbstverständlich für eine Linse allein oder ein Prisma allein ebenso gültig, in diesem Falle werden Verfahrensschritte oder die entsprechenden Terme natürlich nicht durchgeführt oder nicht beachtet. Zur Berechnung der komplexen Werte des Subhologramms umfasst diese Detaillierung des Verfahrens für jeden sichtbaren Objektpunkt der Szene die nachfolgenden Schritte:

A: Ermittlung der Größe und Lage des Modulatorbereichs, analog den oben genannten Ausführungen, jedoch wird nachfolgend dem Modulatorbereich ein lokales Koordinatensystem zugrunde gelegt, wobei der Ursprung des Systems im Zentrum liegt, die x-Koordinate die Abszisse und die y-Koordinate die Ordinate beschreibt. Für den Modulatorbereich wird "a" als halbe Breite und "b" als halbe Höhe als Bemaßung gewählt, wobei diese Intervallgrenzen in die nachfolgenden Terme eingehen.

B: Ermittlung des Subhologramms der Linse in der Hologrammebene:

B1: Bestimmung der Brennweite f der Linse:

Die Brennweite f der Linse ist vorzugsweise der Normalabstand des zu rekonstruierenden Objektpunkts von der Hologrammebene.

B2: Komplexe Werte des zugehörigen Subhologramms der Linse:

Die komplexen Werte des zugehörigen Subhologramms werden aus

$$z_L = \exp \{ +/-i^*[ (\pi/\lambda f) * ( x^2 + y^2 )]\},$$

ermittelt, mit $\lambda$ als Bezugswellenlänge, f als Brennweite und dem zugehörigen Koordinatenpaar (x, y). Das negative Vorzeichen folgt hier aus der Eigenschaft einer konkaven Linse. Eine konvexe Linse ist durch ein positives Vorzeichen gekennzeichnet.

B3: Aufgrund der Symmetrie in x und y ist es ausreichend, die komplexen Werte in einem Quadranten zu ermitteln und unter Beachtung der Vorzeichen die weiteren Werte auf die anderen Quadranten zu übertragen.

C: Ermittlung der Subhologramme der Prismen (P) in der Hologrammebene:

Die gewählten Prismen gehen dabei, siehe auch die nachfolgenden Figuren, durch die Abszisse beziehungsweise Ordinate.

C1: Bestimmung des Linearfaktors $C_x$ des Prismas (PH) mit horizontaler Wirkungsrichtung, welcher im Intervall $x \in [-a, a]$ beschrieben wird durch

$$C_x = M * (2\pi/\lambda);$$

mit M als Neigung des Prismas.
C2: Bestimmung des Linearfaktors $C_y$ des Prismas (PV) mit vertikaler Wirkungsrichtung, welcher analog im Intervall $y \in [-b, b]$ beschrieben wird durch

$$C_y = N * (2\pi/\lambda);$$

mit N als Neigung des Prismas.
C3: Ermittlung der komplexen Werte des zugehörigen Subhologramms der kombinierten Prismen:

Die komplexen Werte für das zugehörige Subhologramm werden aus der Überlagerung der beiden Prismenterme

$$z_P = \exp \{ i^* [ C_x^*(x-a) + C_y^*(y-b)]\}$$

ermittelt. Das überlagerte Prisma geht durch den Ursprung des lokalen Koordinatensystems.

C4: Ein entsprechender Prismenterm entfällt, wenn die holographische Wiedergabeeinrichtung die Eigenschaft aufweist, die Lichtquelle in den Sichtbarkeitsbereich abzubilden.

D: Modulation der Subhologramme für Linse und Prismen:

Zur Ermittlung des kombinierten Subhologramms werden die komplexen Werte der Linse und der Prismen komplex multipliziert:

$$z_{SH} = z_L{}^* z_P$$

beziehungsweise symbolisch SH = SH$_L$ * SH$_P$

E: Anwendung der Zufallsphase:

Jedem modulierten Subhologramm aus Schritt D wird eine zufallsverteilte Phase zugeordnet, um eine homogene Helligkeitsverteilung im Sichtbarkeitsbereich zu gewährleisten. Die Zufallsphase wird zum Subhologramm aufaddiert, indem eine komplexe Multiplikation ausgeführt wird:

$$z_{SH} := z_{SH} \exp (i\Phi_0)$$

beziehungsweise symbolisch SH := SH exp (i$\Phi_0$)

Die Zufallsphase wird jedem Subhologramm einzeln zugeordnet. Vorzugsweise sind insgesamt global betrachtet die Zufallsphasen aller Subhologramme gleich verteilt.

F: Intensitätsmodulation:

Die komplexen Werte werden mit einem zusätzlichen Multiplikationsfaktor, welcher die Intensität beziehungsweise die Helligkeit repräsentiert, versehen.

$$z_{SH} = C^* z_{SH}$$

beziehungsweise symbolisch SH := C * SH;

G: Wird das Gesamthologramm berechnet, so werden die Subhologramme zum Gesamthologramm überlagert. In einer einfachen Lösung werden die Subhologramme, zum Gesamthologramm - unter Beachtung der Lage der Subhologramme - komplex aufaddiert.

Gesamthologramm = komplexe Summe der Subhologramme mit

$$H\Sigma_{SLM} = \Sigma\ SH_i$$

beziehungsweise symbolisch $Z_{SLM} = \Sigma Z_{SHi}$

(mit Bezug auf ein globales Koordinatensystem)

Das Verfahren wird vorzugsweise nur für sichtbare Objektpunkte angewendet. Die Sichtbarkeit des Objektpunkts wird im Zuge des Renderns der Szene von einer 3D-Rendering-Graphikpipeline bestimmt und folgt aus der Betrachterposition, also der entsprechenden Position der Pupillen und folglich aus der Position des Sichtbarkeitsbereichs, welcher der Position der Pupillen nachgeführt ist.

Die detaillierte Beschreibung bezieht sich darauf, die bestmögliche Lösung zu berechnen. Es ist selbstverständlich möglich, die genannten Funktionsterme durch einfachere zu ersetzen, wenn eine Verschlechterung der Rekonstruktion akzeptiert oder gar gewünscht wird. Auf der anderen Seite ist es ersichtlich, dass aufdatierte Verfahrensschritte angewendet werden, um die Qualität der Rekonstruktion zu erhöhen. Beispielsweise können Linsen beziehungsweise Prismen speziell gewählt werden, um Abberationen, toleranzbehaftete Lichtmodulatormittel oder dergleichen zu kompensieren. Dies gilt ebenso für die beispielhaft genannten Methoden, den Modulatorbereich zu bestimmen.

Wie aus Fig. B1, welche auf Fig. 1 aufbaut, ersichtlich, wird dem Modulatorbereich (MR) ein Koordinatensystem zugrunde gelegt, wobei der Ursprung des Systems im Zentrum liegt, die x-Koordinate die Abszisse und die y-Koordinate die Ordinate beschreibt. Dem Modulatorbereich (MR) sind a als halbe Breite und b als halbe Höhe zugeordnet.

Fig. B2a zeigt die holographische Wiedergabeeinrichtung (HAE) in einer Seitenansicht und veranschaulicht das Grundprinzip des Verfahrens. Analog zu Fig. B1 wird ausgehend vom Sichtbarkeitsbereich (VR) der Modulatorbereich (MR) abgeleitet. Dieser Bereich ist in der Hologrammebene (HE), in welcher sich der Lichtmodulator (SLM) befindet. Dem Modulatorbereich ist das oben genannte Koordinatensystem zugeordnet. Im Modulatorbereich (MR) liegt das Abbildungselement (OS), welches hier eine Sammellinse (L) und ein Prisma (P) umfasst. Für das Prisma ist nur der vertikal wirkende Prismenkeil eingezeichnet und das Abbildungselement (OS) ist in der Figur zur besseren Sichtbarkeit vor der Hologrammebene (HE) liegend eingezeichnet.

Fig. B2b zeigt einen horizontal wirkenden Prismenkeil (PH) vor dem Modulatorbereich (MR) mit den entsprechend verwendeten Koordinaten und Bemaßungen. Der Prismenkeil geht hier durch die Ordinate.

Fig. B2c zeigt analog einen vertikal wirkenden, durch die Abszisse gehenden Prismenkeil (PV). Die beiden Prismenkeile werden, wie nachfolgend erläutert überlagert.

Fig. B3 zeigt einen Ablaufplan des bevorzugten Verfahrens. Ausgangspunkt des Verfahrens ist eine dreidimensionale Szene (3D-S), welche in eine Vielzahl von Objektpunkten (OP) strukturiert wird. Zu den Objektpunkten (OP) sind Farb- und Tiefeninformationen verfügbar. Anhand der Tiefeninformation des Objektpunkts wird dessen Sichtbarkeit gemäß der Betrachterposition, respektive der Pupillen des Betrachters, ermittelt.

Für jeden sichtbaren Objektpunkt wird im Schritt (A) die Größe und Lage des zugehörigen Modulatorbereichs (MR) in der Hologrammebene (HE) beziehungsweise auf dem Lichtmodulatormittel bestimmt. Dem Gedanken der Erfindung folgend wird der zu rekonstruierende Objektpunkt (OP) als der Brennpunkt eines in der Hologrammebene liegenden Abbildungselements interpretiert. Das Abbildungselement ist hier als Kombination einer Sammellinse (L) und, siehe Fig.2b, 2c, von vertikal beziehungsweise horizontal wirkenden Prismen (PH, PV) aufgefasst. Für jeden sichtbaren Objektpunkt wird somit im Schritt (B1) die Brennweite der Linse (L) als Normalabstand des Objektpunkts (OP) zur Hologrammebene (HE) ermittelt. Die komplexen Werte des zugehörigen Subhologramms ($SH_L$) werden im Schritt (B2) aus

$$z_L = \exp\{-i^*[(\pi/\lambda f) * (x^2 + y^2)]\}$$

ermittelt, mit $\lambda$ als Bezugswellenlänge, f als Brennweite, und dem zugehörigen lokalen Koordinatenpaar (x, y). Das Koordinatensystem ist wie eingangs beschrieben festgelegt.

Im Schritt (C) werden die Subhologramme ($SH_P$) der Prismen (P) in der Hologrammebene ermittelt. Die Bestimmung des Linearfaktors $C_x$ des Prismas (PH) mit horizontaler Wirkungsrichtung erfolgt durch $C_x = M * (2\pi/\lambda)$; wobei M als Neigung des Prismas definiert ist. Dies erfolgt für das vertikale Prisma analog mit N als Neigung. Die komplexen Werte des zugehörigen Subhologramms ($SH_P$) werden aus der Überlagerung der beiden Prismenterme

$$SH_P := z_P = \exp\{i^* [C_x^*(x-a) + C_y^*(y-b)]\}$$

ermittelt. Ein Prismenterm entfällt, wenn die holographische Wiedergabeeinrichtung die Eigenschaft aufweist, die Lichtquelle in den Sichtbarkeitsbereich (VR) abzubilden.

Nachdem die Subhologramme ($SH_L$) der Linse (L) und jene ($SH_P$) der Prismen (P) nun vorliegen, werden sie überlagert, indem im Schritt (D) für das kombinierte Subhologramm (SH) die komplexen Werte der Linse und der Prismen mit

$$z_{SH} = z_L * z_P$$

beziehungsweise symbolisch SH = SH$_L$ * SH$_P$
komplex multipliziert werden.

Im Schritt (E) wird das Subhologramm (SH) mit einer gleich verteilten Zufallsphase versehen. Im Schritt (F) erfolgt eine Intensitätsmodulation, wobei das Subhologramm (SH) durch

$$z_{SH} = C \cdot z_{SH}$$

beziehungsweise symbolisch TH := C * TH
mit einem Intensitätsfaktor versehen wird.

Das kombinierte Subhologramm (SH) eines Objektpunkts (OP) liegt nun, wie gewünscht, vollständig vor. Zusätzlich wäre es in einem Verfahrensschritt (G) denkbar, die Subhologramme der Objektpunkte zu einem Gesamthologramm (H$\Sigma_{SLM}$) aufzuaddieren. Die einzelnen Subhologramme (SH$_i$ )der Objektpunkte sind superponierbar und werden zum Gesamthologramm (H$\Sigma_{SLM}$) komplex aufaddiert.

Gesamthologramm = komplexe Summe der Subhologramme der Objektpunkte mit

$$H\Sigma_{SLM} = \Sigma\ SH_i$$

beziehungsweise Z$_{SLM}$= $\Sigma$Z$_{SHi}$ (mit Bezug auf ein globales Koordinatensystem)

Das Gesamthologramm (H$\Sigma_{SLM}$) repräsentiert das Hologramm aller Objektpunkte. Es repräsentiert und rekonstruiert somit die gesamte Szene (3D-S).

Mit Hilfe dieses Verfahrens können in Echtzeit die Subhologramme für die interaktive holographische Darstellung für Objektpunkte an beliebigen Positionen innerhalb des Rekonstruktionsraums mit heute verfügbaren Standardkomponenten der Hardware generiert werden. Vorzugsweise werden mit dem bevorzugten Verfahren die Subhologramme ermittelt sowie die genannten Look-Up-Tabellen mit den Subhologrammen befüllt. Analog zum erfindungsgemäßen Verfahren und zur erfindungsgemäßen Einrichtung eignet es sich für holographische Wiedergabeeinrichtungen, welche ebenso das Prinzip der Subhologramme in vorteilhafter Weise nutzen. Insbesondere sind dies, analog den bereits erfolgten Erläuterungen, Einrichtungen nach WO 2004/044659, WO 2006/027228, WO 2005119760, sowie DE 10 2006 004 300.

Liste der verwendeten Bezugszeichen

| | |
|---|---|
| HAE | holographische Wiedergabeeinrichtung HAE |
| RGP | 3D-Rendering-Graphikpipeline |
| FB | Framebuffer der 3D-Rendering-Graphikpipeline |
| ZB | Z-Buffer der 3D-Rendering-Graphikpipeline |
| HGP | holographische Pipeline |
| 3D-S | durch Objektpunkte (OP) strukturierte Szene |
| SLM | Lichtmodulatormittel einer HAE |
| B | Bildschirmmittel einer HAE |
| VR | Sichtbarkeitsbereich(e) |
| OP | Objektpunkt, allgemein |
| OP$_n$, OP$_{n+1}$,... | Objektpunkt, speziell mit Bezugsindex |
| OPN | neu sichtbarer Objektpunkt |
| OPX | obsoleter Objektpunkt |
| SHN | Subhologramm eines neuen Objektpunkts |
| SHX | Subhologramm eines obsoleten Objektpunkts |

| | |
|---|---|
| SH | Subhologramm, allgemein |
| SH, | Subhologramm, allgemein, indiziert |
| MR | Modulatorbereich |
| $SH_n$, $SH_{n+1}$,... | Subhologramm, speziell mit Bezugsindex |
| SD | Differenzsubhologramm |
| SH-IND | Zusatzinformationen zu einem Subhologramm (SH) |
| $H\Sigma_{SLM}$ | Gesamthologramm |
| LUT | Look-Up-Tabelle |
| SH-MEM | Subhologrammspeicher |
| OS | Abbildungselement |
| L | Linse |
| P | Prisma |
| PH | Prisma mit horizontaler Wirkungsrichtung |
| PV | Prisma mit vertikaler Wirkungsrichtung |

**Patentansprüche**

1. Verfahren zum Generieren von Videohologrammen in Echtzeit für eine holographische Wiedergabeeinrichtung (HAE),

mit mindestens einem Lichtmodulatormittel (SLM), in welches eine Szene (3D-S) als Gesamthologramm ($H\Sigma_{SLM}$) kodiert wird und als Rekonstruktion von einem Sichtbarkeitsbereich (VR) aus zu sehen ist, der innerhalb eines Periodizitätsintervalls der Rekonstruierten des Videohologramms liegt,

mit einer 3D-Rendering-Graphikpipeline (RGP), welche die durch Bilddaten mit Tiefeninformation repräsentierte Szene (3D-S) in mehrere Objektpunkte (OP) strukturiert und nachfolgend für die Objektpunkte (OP) mindestens Farb- und Tiefeninformationen ermittelt und bereitstellt, wobei ein einzelner Objektpunkt (OP) der Szene (3D-S) jeweils durch ein in einem begrenzten Teilbereich des Lichtmodulatormittels (SLM) zu kodierendes Subhologramm (SH) erzeugt wird und das Gesamthologramm ($H\Sigma_{SLM}$) aus einer Überlagerung der Subhologramme (SH) gebildet wird, und

mit einer holographischen Pipeline (HGP) zum Generieren der komplexen Hologrammwerte der Objektpunkte (OP), wobei von der holographischen Pipeline (HGP) sofort komplexe Hologrammwerte für jeden gemäß der Betrachterposition (VP) sichtbaren Objektpunkt (OPN) ermittelt werden, sobald für diesen Objektpunkt Tiefen- und Farbinformationen erstmals vorliegen oder aktuell aktualisiert werden, indem

  - (A) das zu diesem sichtbaren Objektpunkt (OPN) zugehörige Subhologramm (SHN) und ,falls durch diesen sichtbaren Objektpunkt (OPN) ein anderer Objektpunkt (OPX) nicht mehr sichtbar und nunmehr obsolet ist, ein zugehöriges Differenzsubhologramm (SD) ermittelt werden, wobei das Differenzsubhologramm (SD; SD = SHN-SHX) als Differenz des zugehörigen Subhologramms (SHN) des sichtbaren Objektpunkts (OPN) und des Subhologramms (SHX) des nunmehr obsoleten, nicht mehr sichtbaren Objektpunkts (OPX) festgelegt ist,
  - (B) das Subhologramm (SHN) des sichtbaren Objektpunktes (OPN) oder, falls in Schritt (A) ermittelt, das Differenzsubhologramm (SD) zum Gesamthologramm($H\Sigma_{SLM}$) aufaddiert wird, und
  - (C) die Informationsverknüpfung des Objektpunkts (OPN) und dessen Subhologramms (SHN) in mindestens einem Subhologrammspeicher (SH-MEM) abrufbar gemacht wird.

2. Verfahren nach Anspruch 1, wobei das Differenzsubhologramm (SD) von Objektpunkten (OPN, OPX), gemäß der aktualisierten Tiefeninformation

  (a) mit (SD = SHN-SHX) durch die Differenz des Subhologramms (SHN) eines näher an der Betrachterposition liegenden Objektpunkts (OPN) und des Subhologramms (SHX) eines nunmehr davon überdeckten, nicht mehr sichtbaren Objektpunkts (OPX), oder umgekehrt

  (b) mit (SD = SHN-SHX) durch die Differenz des Subhologramms (SHN) eines ferner der Betrachterposition liegenden Objektpunkts (OPN) und des Subhologramms (SHX) eines bisher sichtbaren Objektpunkts (OPX) festgelegt ist.

3. Verfahren nach Anspruch 2, wobei zur Ermittlung des Differenzsubhologramms (SD) eines sichtbaren Objektpunkts (OPN) und eines obsoleten Objektpunkts (OPX) mit (SD = SHN-SHX) das Subhologramm (SHX) des obsoleten Objektpunkts (OPX) aus dem Subhologrammspeicher (SH-MEM) abgerufen und angewandt wird.

4. Verfahren nach Anspruch 1, wobei die Informationsverknüpfung eines Objektpunkts (OP) und dessen Subhologramms (SH) durch einen zugehörigen Verweis auf den Eintrag in mindestens einer Look-Up-Tabelle (LUT) der Subhologramme oder einen Verweis auf den Subhologrammspeicher (SH-MEM) abrufbar ist oder wobei für jeden Objektpunkt (OP) der Beitrag des zugehörigen Subhologramms (SH) aus Look-Up-Tabellen (LUT) abgerufen wird.

5. Verfahren nach Anspruch 1, wobei die Hologrammwerte des Subhologramms eines Objektpunkts ermittelt werden oder vorab für jeden möglichen Objektpunkt in einem definierten Raumbereich der zugehörige Eintrag des Subhologramms einer oder mehrerer Look-Up-Tabellen generiert wird, wobei computergestützt die folgenden Schritte durchgeführt werden:

   • aus jedem Objektdatensatz jeder tomographischen Szeneschnittfläche wird ein Beugungsbild in Form einer separaten zweidimensionalen Verteilung von Wellenfeldern für eine Betrachterebene mit einem endlichen Abstand parallel zu den Schnittebenen berechnet, wobei die Wellenfelder aller Schnitte für mindestens einen gemeinsamen Sichtbarkeitsbereich berechnet werden
   • die berechneten Verteilungen aller Schnittebenen werden zur Beschreibung eines gemeinsamen Wellenfeldes für den Sichtbarkeitsbereich in einem zur Betrachterebene referenzierten Datensatz addiert und
   • der Referenzdatensatz zum Erzeugen eines Hologrammdatensatzes für ein gemeinsames computer-generiertes Hologramm der Szene wird in eine von der Referenzebene endlich entfernte, parallele Hologrammebene transformiert, wobei in der Hologrammebene das Lichtmodulatormittel liegt.

6. Verfahren nach Anspruch 1, wobei die Hologrammwerte des Subhologramms eines Objektpunkts ermittelt werden oder vorab für jeden möglichen Objektpunkt in einem definierten Raumbereich der zugehörige Eintrag des Subhologramms einer oder mehrerer Look-Up-Tabellen generiert wird, wobei die komplexen Hologrammwerte eines Subhologramms (SH) aus der Wellenfront des jeweils zu rekonstruierenden Objektpunkts (OP) in einem Modulatorbereich (MR) des Lichtmodulatormittels ermittelt werden, indem die Transmissions- oder Modulationsfunktionen eines im Modulatorbereich (MR) modellierten Abbildungselements (OS), in dessen Brennpunkt der zu rekonstruierende Objektpunkt (OP) liegt, berechnet und ausgewertet werden.

7. Verfahren nach Anspruch 6, wobei das Abbildungselement (OS) wenigstens eine Linse (L) umfasst und vorzugsweise zusätzlich wenigstens ein Prisma (P) umfasst.

8. Verfahren nach Anspruch 6, wobei die Lage des Modulatorbereichs (MR) ermittelt wird, indem das Zentrum des Modulatorbereichs (MR) auf der Geraden durch den zu rekonstruierenden Objektpunkt (OP) und das Zentrum des Sichtbarkeitsbereichs (VR) liegt oder wobei die Größe des Modulatorbereichs (MR) durch Rückverfolgung des Sichtbarkeitsbereichs (VR) durch den Objektpunkt (OP) auf die Hologrammebene (HE) ermittelt wird.

9. Verfahren nach Anspruch 6, wobei jedem modulierten Subhologramm (SH) eines Objektpunkts jeweils eine zufallsverteilte Phase zugeordnet wird und die Zufallsphasen aller Subhologramme insgesamt gleich verteilt sind oder wobei unter Beachtung der Lage der Subhologramme (SH) deren Überlagerung zum Gesamthologramm ($H\Sigma_{SLM}$) mit $H\Sigma_{SLM}=\Sigma SH_i$ als komplexe Summe der Subhologramme (SH) gebildet wird.

10. Verfahren nach einem oder mehreren der Ansprüche 1 bis 9, wobei die komplexen Hologrammwerte in Pixelwerte des Lichtmodulatormittels (SLM), vorzugsweise in Burckhardt-Komponenten oder Zweiphasenkomponenten, umgewandelt werden.

11. Berechnungseinrichtung zum Durchführen des Verfahrens nach einem oder mehreren der Ansprüche 1 bis 9, mit einer 3D-Rendering-Graphikpipeline (RGP) zur strukturierung einer durch Bilddaten mit Tiefeninformation repräsentierten Szene (3D-S) in Objektpunkte (OP) und nachfolgender Ermittlung und Breitstellung von mindestens Farb- und für die Objektpunkte (OP) Tiefeninformationen und mit einer holographischen Pipeline (HGP) zur Generierung komplexer Hologrammwerte der Objektpunkte (OP) zur Darstellung der Szene (3D-S) auf mindestens einem Lichtmodulatormittel (SLM) einer holographischen Wiedergabeeinrichtung (HAE) mindestens umfassend

   • Mittel zum Auslesen der ermittelten Farbwerte sowie der ermittelten Tiefenwerte der Objektpunkte (OP)
   • Mittel zur Bereitstellung von zu Objektpunkten (OP) gehörigen Subhologrammen (SH) bezüglich der Farb- und Tiefeninformationen
   • Mittel zur Berechnung und Speicherung eines Gesamthologramms ($HZ_{SLM}$)
   • Mittel zum Berechnen des Differenzsubhologramms (SD) des Objektpunkts (OP)

• Speichermittel als Subhologrammspeicher (SH-MEM), wobei die Informationsverknüpfung des Objektpunkts (OP) und dessen Subhologramm (SH) speicherbar und abrufbar gemacht werden.

**12.** Berechnungseinrichtung nach Anspruch 11, mindestens umfassend Mittel zum Auslesen der ermittelten Farbwerte eines Objektpunkt (OP) aus einem Framebuffer (FB) sowie der ermittelten Tiefenwerte aus einem Z-Buffer (ZB) der 3D-Rendering-Graphikpipeline (RGP) oder mindestens umfassend Speichermittel, wobei für jeden Objektpunkt (OP) der Beitrag des zugehörigen Subhologramms (SH) aus wenigstens einer Look-Up-Tabelle (LUT) bestimmbar ist.

**13.** Berechnungseinrichtung nach Anspruch 11, mindestens umfassend dedizierte Berechnungsmittel, in welchen nach einem der Ansprüche 6 bis 8 im Zusammenwirken mit der holographischen Pipeline (HGP) für jeden Objektpunkt (OP) die komplexen Hologrammwerte analytisch ermittelt werden oder umfassend Mittel zur Erkennung der Konfigurationsdaten einer holographischen Wiedergabeeinrichtung (HAE).

**14.** Berechnungseinrichtung nach Anspruch 13, wobei die Mittel zur Erkennung mindestens die Größe oder Auflösung der Lichtmodulatormittel (SLM) sowie die Art der Kodierung erfassen.

**15.** Berechnungseinrichtung nach einem oder mehreren der Ansprüche 12 bis 14, wobei die komplexen Hologrammwerte in Pixelwerte des Lichtmodulatormittels (SLM), vorzugsweise in Burckhardt-Komponenten oder Zweiphasenkomponenten, umgewandelt werden.

**16.** Holographische Wiedergabeeinrichtung mit einer Berechnungseinrichtung nach Anspruch 11 und mit einem Bildschirmmittel (B), das entweder das Lichtmodulatormittel (SLM) selbst bezeichnet, in dem das Hologramm der Szene (3D-S) kodiert ist, oder ein optisches Element, auf das ein im Lichtmodulatormittel kodiertes Hologramm oder eine im Lichtmodulatormittel kodierte Wellenfront der Szene abgebildet ist, wobei das optische Element vorzugsweise eine Linse oder ein Spiegel ist.

**Claims**

**1.** Method for the real-time generation of video holograms for a holographic display device (HAE) with at least one light modulator means (SLM) into which a scene (3D-S) is to be encoded as an entire hologram (H$\Sigma_{SLM}$) and is to be seen as a reconstruction from a visibility region (VR) which lies within one periodicity interval of the reconstruction of the video hologram, with a 3D rendering graphics pipeline (RGP) which structures the scene (3D-S) into a plurality of object points (OP), where the scene (3D-S) is represented by image data with depth information, and which thereafter determines and provides at least colour information and depth information for the object points (OP), where a single object point (OP) of the scene (3D-S) is generated by one sub-hologram (SH) which is to be encoded on a limited sub-region of the light modulator means (SLM), and where the entire hologram (H$\Sigma_{SLM}$) is formed by way of a superposition of the sub-holograms (SH), and with a holographic pipeline (HGP) for the generation of the complex hologram values of the object points (OP), whereby the holographic pipeline (HGP) immediately determines complex hologram values for each object point (OPN) being visible according to the actual observer position (VP) as soon as for that object point depth information and colour information are provided for the first time or currently updated in that

• (A) the sub-hologram (SHN) corresponding to that visible object point (OPN) and, if another object point (OPX) is not visible anymore and now is obsolete, a corresponding differential sub-hologram (SD) are determined, whereby the differential sub-hologram (SD; SD = SHN-SHX) is determined to be the difference of the corresponding sub-hologram (SHN) of the visible object point (OPN) and the sub-hologram (SHX) of the object point (OPX) now being obsolete, no longer visible,

• (B) the sub-hologram (SHN) of the visible object point (OPN) or, if determined in step (A), the differential sub-hologram (SD) is added to the entire hologram (H$\Sigma_{SLM}$), and

• (C) the information link of the object point (OPN) and of the sub-hologram (SHN) of this object point (OPN) is made available in at least one sub-hologram memory (SH-MEM).

**2.** Method according to claim 1, where the differential sub-hologram (SD) of object points (OPN, OPX) is defined according to the updated depth information

a) with (SD = SHN-SHX) by the difference of the sub-hologram (SHN) of an object point (OPN) which is closer to the observer position, and the sub-hologram (SHX) of an object point (OPX) which is now covered by the former and thus no longer visible, or, vice versa,

b) with (SD = SHN-SHX) by the difference of the sub-hologram (SHN) of an object point (OPN) which is further away from the observer position, and the sub-hologram (SHX) of an object point (OPX) which has been visible so far.

3. Method according to claim 2, where in order to compute the differential sub-hologram (SD) of a visible object point (OPN) and an obsolete object point (OPX) with (SD = SHN-SHX) the sub-hologram (SHX) of the obsolete object point (OPX) is retrieved from the sub-hologram memory (SH-MEM) and applied in the computation.

4. Method according to claim 1, where the information link of an object point (OP) and its sub-hologram (SH) is retrievable through a corresponding reference to the entry in at least one look-up table (LUT) of the sub-holograms, or through a reference to the sub-hologram memory (SH-MEM), or where for each object point (OP) the contribution of the corresponding sub-hologram (SH) is retrieved from look-up tables (LUT).

5. Method according to claim 1, where the hologram values of the sub-hologram of an object point are determined, or where the corresponding entry of the sub-hologram in one or multiple look-up tables is generated in advance for each possible object point in a defined volume, where the following steps are carried out aided by a computer:

   • A diffraction image from each object data set of each tomographic scene section is computed in the form of a separate two-dimensional distribution of wave fields for an observer plane, which is situated at a finite distance and parallel to the section planes, where the wave fields of all sections are computed for at least one common visibility region,
   • The computed distributions of all section layers are added to define an aggregated wave field for the visibility region in a data set which is referenced in relation to the observer plane, and
   • For generating a hologram data set for a common computer-generated hologram of the scene, the reference data set is transformed into a hologram plane, which is situated at a finite distance and parallel to the reference plane, where the light modulator means lies in the hologram plane.

6. Method according to claim 1, where the hologram values of a sub-hologram of an object point are determined, or where the corresponding entry of the sub-hologram in one or multiple look-up tables is generated in advance for each possible object point, where the complex hologram values of a sub-hologram (SH) are determined in a modulator region (MR) of the light modulator means out of the wave front of the object point (OP) to be reconstructed, in that the transmittance functions or modulation functions of an imaging element (OS), which is modelled in the modulator region (MR) and in whose focal point the object point (OP) to be reconstructed lies, are computed and analysed.

7. Method according to claim 6, where the imaging element (OS) comprises at least one lens (L) and preferably additionally comprises at least one prism (P).

8. Method according to claim 6, where the position of the modulator region (MR) is determined in that the centre of the modulator region (MR) lies on the straight line through the object point (OP) to be reconstructed and the centre of the visibility region (VR) or where the size of the modulator region (MR) is determined by ray tracing of the visibility region (VR) through the object point (OP) to the hologram plane (HE).

9. Method according to claim 6, where each modulated sub-hologram (SH) of an object point is given a random phase, and the random phases of all sub-holograms are evenly distributed, or where, considering the position of the sub-holograms (SH), their superposition to form an entire hologram ($H\Sigma_{SLM}$) is computed as the complex sum of the sub-holograms (SH) with $H\Sigma_{SLM} = \Sigma$ SH.

10. Method according to one or more of claims 1 to 9, where the complex hologram values are converted into pixel values of the light modulator means (SLM), preferably into Burckhardt components or two-phase components.

11. Computing device for implementing the method according to one or more of the claims 1 to 9, with a 3D rendering graphics pipeline (RGP) for structuring a scene (3D-S), which is represented by image data with depth information, into object points (OP) and for subsequent determining and providing at least colour information and depth information for those object points (OP), and with a holographic pipeline (HGP) for generating complex hologram values of the object points (OP) for the representation of the scene (3D-S) on at least one light modulator means (SLM) of a holographic display device (HAE), at least comprising

• Means for reading the determined colour values and the determined depth values of the object points (OP),
• Means for providing sub-holograms (SH) belonging to object points (OP) regarding colour information and depth information,
• Means for computing and storing an entire hologram (H$\Sigma_{SLM}$),
• Means for computing the differential sub-hologram (SD) of the object point (OP),
• Storage means to be used as sub-hologram memory (SH-MEM), whereby the information link of the object point (OP) and the corresponding sub-hologram (SH) are made storable and retrievable.

12. Computing device according to claim 11, comprising at least means for reading the determined colour values of an object point (OP) from a frame buffer (FB) and the determined depth values from a Z buffer (ZB) of the 3D rendering graphics pipeline (RGP) or comprising at least storage means, whereby for each object point (OP) the contribution of the corresponding sub-hologram (SH) can be retrieved from at least one look-up table (LUT).

13. Computing device according to claim 11, comprising at least dedicated computing means which according to one of claims 6 to 8 analytically determine the complex hologram values for each object point (OP) together with the holographic pipeline (HGP) or comprising means for detecting the configuration data of a holographic display device (HAE).

14. Computing device according to claim 13, where the means for detecting at least size or resolution of the light modulator means (SLM) and type of encoding comprise.

15. Computing device according to one or more of claims 12 to 14, where the complex hologram values are converted into pixel values of the light modulator means (SLM), preferably into Burckhardt components or two-phase components.

16. Holographic display device with a computing device according to claim 11 with a screen means (B), where the screen means (B) is either the light modulator means (SLM) itself on which the hologram of the scene (3D-S) is encoded, or an optical element, onto which a hologram or wave front of the scene encoded on the light modulator means is imaged, where the optical element preferably is a lens or a mirror.

## Revendications

1. Procédé pour générer des hologrammes vidéo en temps réel pour un dispositif de restitution holographique (HAE), avec au moins un moyen modulateur de lumière (SLM), dans lequel une scène (3D-S) est codée en tant que hologramme complet (H$\Sigma_{SLM}$) et doit être considérée comme la reconstruction d'une zone de visibilité (VR) qui est située à l'intérieur d'un intervalle de périodicité de la reconstruction de l'hologramme vidéo,
avec un pipeline graphique à rendu 3D (RGP) qui structure la scène (3D-S) représentée par des données d'image avec des informations de profondeur en plusieurs points d'objet (OP) et ensuite détermine et prépare pour les points d'objet (OP) au moins des informations de couleur et de profondeur, chaque point d'objet (OP) de la scène (3D-S) étant produit par un sous-hologramme (SH) à coder dans un sous secteur limité du moyen modulateur de lumière (SLM) et l' hologramme complet (H$\Sigma_{SLM}$) étant formé à partir d' une superposition des sous-hologrammes (SH), et avec un pipeline holographique (HGP) permettant de générer les valeurs d'hologramme complexes des points d' objet (OP),
dans lequel des valeurs d'hologramme complexes sont déterminées immédiatement par le pipeline (HGP) holographique pour chaque point d'objet visible (OPN) selon la position de l'observateur (VP) dès que des informations de profondeur et de couleur sont présentes pour la première fois pour chaque point d'objet ou sont mises à jour, par le fait

- (A) que le sous-hologramme (SHN) associé à ce point d'objet visible (OPN) et, si un autre point d'objet (OPX) n'est plus visible à cause de ce point d'objet (OPN) et est désormais obsolète, un sous-hologramme de différence (SD) associé sont déterminés, dans lequel le sous-hologramme de différence (SD ; SD = SHN - SHX) est défini par la différence entre le sous-hologramme (SHN) associé au point d'objet visible (OPN) et le sous-hologramme (SHX) du point d'objet (OPX) qui n'est plus visible et désormais obsolète,
- (B) que le sous-hologramme (SHN) du point d'objet visible (OPN) ou le sous-hologramme de différence (SD), s'il a été déterminé à l'étape (A), est additionné à l'hologramme complet (H$\Sigma_{SLM}$), et
- (C) que la combinaison d'informations du point d'objet (OPN) et de son sous-hologramme (SHN) est rendue accessible dans au moins une mémoire de sous-hologramme (SH-MEM) .

**2.** Procédé selon la revendication 1, dans lequel le sous-hologramme de différence (SD) de points d'objet (OPN, OPX) est défini, selon les informations de profondeur mises à jour,

> (a) avec (SD = SHN-SHX) par la différence du sous-hologramme (SHN) d'un point d'objet (OPN) situé plus près de la position de l'observateur et du sous-hologramme (SHX) d'un point d'objet (OPX) qui est désormais recouvert par ledit point d'objet et n'est plus visible, ou vice versa
> (b) avec (SD = SHN-SHX) par la différence du sous-hologramme (SHN) d'un point d'objet (OPN) situé plus loin de la position de l'observateur et du sous-hologramme (SHX) d'un point d'objet (OPX) visible jusqu'à présent.

**3.** Procédé selon la revendication 2, dans lequel, pour déterminer le sous-hologramme de différence (SD) d'un point d'objet visible (OPN) et d'un point d'objet obsolète (OPX) avec (SD = SHN-SHX), le sous-hologramme (SHX) du point d'objet obsolète (OPX) est extrait de la mémoire de sous-hologramme (SH-MEM) et est appliqué.

**4.** Procédé selon la revendication 1, dans lequel la combinaison d'informations d'un point d'objet (OP) et de son sous-hologramme (SH) peut être accessible par un renvoi associé à une entrée dans au moins une table de correspondance (LUT) des sous-hologrammes ou par un renvoi à la mémoire de sous-hologramme (SH-MEM), ou dans lequel la contribution du sous-hologramme associé (SH) est accessible dans des tables de correspondance (LUT) pour chaque point d'objet (OP).

**5.** Procédé selon la revendication 1, dans lequel les valeurs d'hologramme du sous-hologramme d'un point d'objet sont déterminées ou l'entrée associée au sous-hologramme d'une ou plusieurs tables de correspondance est générée à l'avance pour chaque point d'objet possible dans une zone spatiale définie, les étapes suivantes étant exécutées à l'aide d'un ordinateur :

> - à partir de chaque enregistrement de données d'objet de chaque coupe de scène tomographique, il est calculé une image de diffraction sous forme d'une distribution bidimensionnelle séparée de champs d'onde pour un plan de l'observateur à une distance infinie et parallèle aux plans de section, les champs d'onde de toutes les sections étant calculés pour au moins une zone de visibilité commune
> - les distributions calculées de tous les plans de section sont additionnées pour décrire un champ d'onde commun pour la zone de visibilité dans un enregistrement de données référencé au plan de l'observateur, et
> - l'enregistrement de données de référence destiné à produire un enregistrement de données d'hologramme pour un hologramme, commun de la scène et généré par ordinateur, est transformé en un plan d'hologramme parallèle et à une distance infinie du plan de référence, le moyen modulateur de lumière étant situé dans le plan d'hologramme.

**6.** Procédé selon la revendication 1, dans lequel les valeurs d'hologramme du sous-hologramme d'un point d'objet sont déterminées, ou, pour chaque point d'objet possible dans une zone spatiale définie, l'entrée associée au sous-hologramme d'une ou de plusieurs tables de correspondance est générée à l'avance, les valeurs d'hologramme complexes d'un sous-hologramme (SH) étant déterminées à partir du front d'onde du point d'objet (OP) respectif à reconstruire dans une zone de modulateur (MR) du moyen modulateur de lumière en calculant et évaluant les fonctions de transmission ou de modulation d'un élément d'image (OS) qui est modélisé dans la zone de modulateur (MR) et dans le foyer duquel est situé le point d'objet (OP) à reconstruire.

**7.** Procédé selon la revendication 6, dans lequel l'élément d'image (OS) comporte au moins une lentille (L) et, de préférence, comporte en plus au moins un prisme (P).

**8.** Procédé selon la revendication 6, dans lequel la position de la zone de modulateur (MR) est déterminée par le fait que le centre de la zone de modulateur (MR) est situé sur la droite passant par le point d'objet (OP) à reconstruire et par le centre de la zone de visibilité (VR), ou la taille de la zone de modulateur (MR) est déterminée en traçant la zone de visibilité (VR) à travers le point d'objet (OP) sur le plan de l'hologramme (HE).

**9.** Procédé selon la revendication 6, dans lequel une phase distribuée aléatoirement est associée à chaque sous-hologramme (SH) modulé d'un point d'objet et les phases aléatoires de tous les sous-hologrammes sont distribuées dans l'ensemble de manière identique, ou, en tenant compte de la position des sous-hologrammes (SH), leur superposition par rapport à l'hologramme complet ($H\Sigma_{SLM}$) est formée en tant que somme complexe des sous-hologrammes (SH) avec $H\Sigma_{SLM} = \Sigma SHi$.

**10.** Procédé selon une ou plusieurs des revendications 1 à 9, **caractérisé en que** les valeurs d'hologramme complexes sont converties en des valeurs de pixel du moyen modulateur de lumière (SLM), de préférence en des composantes de Burckhardt ou des composantes à deux phases.

11. Dispositif de calcul permettant d'exécuter le procédé selon une ou plusieurs des revendications 1 à 9, avec un pipeline graphique à rendu 3D (RGP) servant à structurer une scène (3D-S), représentée par des données d'image avec des informations de profondeur, dans des points d'objet (OP) et avec détermination et préparation consécutives d'au moins des informations de couleur et de profondeur pour les points d'objet (OP), et avec un pipeline holographique (HGP) servant à produire des valeurs d'hologramme complexes des points d'objet (OP) afin de représenter la scène (3D-S) sur au moins un moyen modulateur de lumière (SLM) d'un dispositif de restitution holographique (HAE), comportant au moins

- un moyen de lecture des valeurs de couleur déterminées et des valeurs de profondeur déterminées des points d'objet (OP)
- un moyen de préparation de sous-hologrammes (SH) associé aux points d'objet (OP) relativement aux informations de couleur et de profondeur
- un moyen de calcul et de mémorisation d'un hologramme complet (H$\Sigma_{SLM}$)
- un moyen de calcul du sous-hologramme de différence (SD) du point d'objet (OP)
- un moyen de mémorisation servant de mémoire de sous-hologramme (SH-MEM), la combinaison d'informations du point d'objet (OP) et de son sous-hologramme (SH) étant rendue mémorisable et accessible.

12. Dispositif de calcul selon la revendication 11, comportant au moins un moyen permettant de lire des valeurs de couleur déterminées d'un point d'objet (OP) à partir d'une mémoire vidéo (FB) et des valeurs de profondeur déterminées à partir d'une mémoire de profondeur (ZB) du pipeline graphique à rendu 3D (RGP) ou comportant au moins un moyen de mémorisation, dans lequel la contribution du sous-hologramme (SH) correspondant peut être déterminée pour chaque point d'objet (OP) à partir d'au moins une table de correspondance (LUT).

13. Dispositif de calcul selon la revendication 11, comportant au moins des moyens de calcul dédiés, dans lequel, selon une des revendications 6 à 8 et en coopération avec le pipeline holographique (HGP), les valeurs d'hologramme complexes sont déterminées analytiquement pour chaque point d'objet (OP) ou comportant un moyen pour détecter des données de configuration d'un dispositif de restitution holographique (HAE).

14. Dispositif de calcul selon la revendication 13, dans lequel le moyen de détection capture au moins la taille ou la résolution du moyen modulateur de lumière (SLM) ainsi que la technique employée pour le codage.

15. Dispositif de calcul selon une ou plusieurs revendications 12 à 14, dans lequel les valeurs d'hologramme complexes sont converties en des valeurs de pixel du moyen modulateur de lumière (SLM), de préférence en des composantes de Burckhardt ou des composantes à deux phases.

16. Dispositif de restitution holographique avec un dispositif de calcul selon la revendication 11 et avec un moyen d'affichage (B), qui désigne soit le moyen modulateur de lumière (SLM) lui même dans lequel l'hologramme de la scène (3D-S) est codé, soit un élément optique sur lequel est reproduit un hologramme codé dans le moyen modulateur de lumière ou un front d'onde de la scène codé dans le moyen modulateur de lumière, l'élément optique étant de préférence une lentille ou un miroir.

Fig. 1a

SHN

SHX

SD=SHN-SHX

OPX

OPN

SLM

VR

Fig. 1b

SHX

SHN

SD=SHN-SHX

OPN

OPX

SLM

VR

Fig. 1c

Betrachterposition VP

Nachführsystem

3D-Rendering-
Graphik-
Pipeline

Framebuffer
FB

Z-Buffer
ZB

RGP

Holographische
Pipeline
HGP

aktueller
Objektpunkt
OPN

(A) Subhologramm
SHN

analytisch

LUT

Fig. B1 - B4

(A) Differenzsubhologramm
SD=SHN-SHX

Fig. 1a, 1b, 1c

SHX zu OPX

Subhologrammspeicher
SH-MEM

(B) Gesamthologramm
$H\Sigma_{SLM}$

SHN

(C) speichern
Subhologramm

{ Korrektur } $H\Sigma_{SLM}$

Fig. 2

Fig. B1

Labels in figure: H$\Sigma_{SLM}$, B, HAE, Y, SH,MR, X, OP, VR, SLM

Fig. B2a

Fig. B2b

Fig. B2c

3D-Szene mit Tiefen- & Farbinformationen, durch eine Vielzahl von Objektpunkten (OP) strukturiert

für jeden sichtbaren Objektpunkt (OP)

(A) Ermittlung der Lage & Größe des Subhologramms (MR)→ Fig. 1

(B) Subhologramm (SH$_L$) der kodierten Linse (L)

(B1) Brennweite f der Linse (L)

(B2) Subhologramm (SH$_L$)

(C) Subhologramm SH$_P$ der Prismen PH, PV

(C1) Linearfaktor C$_x$ für Prisma PH

(C2) Linearfaktor C$_y$ für Prisma PV

(C3) Subhologramm SH$_P$

(D) Modulation der Subhologramme SH$_H$, SH$_P$

(E) Zufallsphase

(F) Helligkeitsmodulation

OP$_n$ := OP$_{n+1}$+1

Subhologramm SH

(G) Gesamthologramm

(H) Umwandlung in Pixelwerte

Betrachterposition

Nachführsystem

# Fig. B3

Fig. B4

EP 2 160 655 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004044659 A, sowie
- WO 2006027228 A
- WO 2006119760 A
- DE 102006004300
- WO 2006066919 A
- DE 102006025096
- DE 102006042324
- WO 2005119760 A, sowie

**In der Beschreibung aufgeführte Nicht-Patentliteratur**

- **von H. Takahashi et al.** *Proc. of the SPIE,* vol. 2406, 220-225